# EUROPEAN PATENT SPECIFICATION

(11) **EP 4 384 326 B1**
(45) Date of publication and mention of the grant of the patent: **02.09.2026**
(21) Application number: 23799604.6
(22) Date of filing: 24.04.2023
(51) Int. Cl.: B05C 5/02, H01M 4/04

(54) **DEPOSITION SYSTEM**
ABSCHEIDUNGSSYSTEM
SYSTÈME DE DÉPÔT

(30) Priority: 04.05.2022 EP 22171502
(43) Date of publication of application: 19.06.2024
(60) Divisional application: 25220982.0 / 4 682 967
(73) Proprietor: LG Energy Solution, Ltd., Seoul 07335 (KR)
(72) Inventor: CHO, Sung Min, Daejeon 34122 (KR); LEE, Hyun Dong, Daejeon 34122 (KR); KIM, Hae Dong, Daejeon 34122 (KR); SHIN, Kyun, Daejeon 34122 (KR); KANG, Sung Mo, Daejeon 34122 (KR); LEE, Jae Pil, Daejeon 34122 (KR)
(74) Representative: Goddar, Heinz J.
(86) International application number: PCT/KR2023/005524
(87) International publication number: WO 2023/214721

(56) References cited:
- WO-A1-2021/132992
- CN-A- 106 216 179
- JP-A- 2004 249 261
- JP-A- 2006 255 643
- JP-A- 2014 233 651
- KR-A- 20130 102 490
- KR-A- 20170 136 311
- KR-A- 20210 083 512
- KR-B1- 101 175 029

## Description

### [Technical Field]

The present invention relates to a system for depositing a material, for example on a substrate. Such a system may be implemented in a system for manufacturing a battery, in particular a secondary battery. Such a system may be used to carry out a manufacturing method of a battery, particularly a secondary battery.

### [Background Art]

In some manufacturing processes, a solid-liquid mixture material, such as a slurry containing an active material for a battery, may be deposited on a substrate, such as an electrode substrate for manufacturing a battery. Depending on the material to be deposited and requirements to the manufacturing method and system, a technical problem may be depositing the material such to obtain a specific thickness profile on the substrate. Especially, conventional systems may be unable to provide a pronounced thickness profile, particularly with a sharp transition between two distinct thickness levels. Furthermore, a technical problem may be depositing the material according to a specific thickness profile on the substrate in an efficient and precise manner.

WO 2021/132992 A1 describes a system for depositing a material according to the preamble of independent claim 1 and a battery according to the preamble of independent claim 10.

JP 2006-255643 A and CN 106 216 179 describe respective systems for depositing a material according to the preamble of independent claim 1.

### [Disclosure]

### [Technical Problem]

The technical problem known from the prior art is solved by the subject matter of the independent claims. Particular embodiments are given by the features of the dependent claims.

### [Technical Solution]

Provided is a system for depositing a material. The system comprises a die and a flow guide. The die comprises an opening and a cavity. The cavity communicates with the opening. The die is configured to extrude the material in a principal deposition direction through the opening. The flow guide is disposed in the cavity. The flow guide is configured to shape a flow of the material extruded by the die. The flow guide comprises a flow narrowing portion and a flow shaping portion. The flow narrowing portion extends in a width direction perpendicular to the principal deposition direction so as to block the material from flowing through in the principal deposition direction. The flow shaping portion extends downstream from the flow narrowing portion in the principal deposition direction. A width of the flow shaping portion is smaller than, or decreases from, a width of the flow narrowing portion.

Herein, widths are determined in the width direction. Lengths as used herein are determined in the principal deposition direction. As mentioned, the width direction and the principal deposition direction are perpendicular to each other. Furthermore, heights as used herein are determined in a height direction that is perpendicular to the width direction and perpendicular to the principal deposition direction. Since the principal deposition direction is defined by a flow direction of the material from the cavity towards the opening as specified below, the principal deposition direction is directional. In other words, a position or a flow along the principal deposition direction are indicated herein as "downstream" with respect to the principal deposition direction (or forward principal deposition direction). In contrast, a position or a flow against or in a direction opposite to the principal deposition direction are indicated herein as "upstream" with respect to principal deposition direction (or backward principal deposition direction). The width direction and the height direction are used herein in a bi-directional manner, i.e., without any reference to a positive or negative direction.

The principal deposition direction refers to a direction in which the material is extruded from/by the die. In other words, the principal deposition direction indicates a direction along which the material is extruded from the opening of the die. Since the material is a flowable material as specified herein, the material may spread out after discharging from the die. Here, the principal deposition direction may refer to an averaged direction over all directions in which the material is extruded from the opening of the die. Alternatively or additionally, the principal deposition direction corresponds to a flow direction of the material received in the cavity and discharged through the opening of the die. As such, the principal deposition direction may be determined by a positional relation of the opening of the die to the cavity.

The system may be implemented as a single apparatus or a single device, or as a distributed system comprising multiple apparatuses or devices. As discussed below, the system may further comprise a unit, such as a coating roll, to convey a substrate on which the material is to be deposited. The system may include any of the features described below.

A battery may generally include or be any of a primary battery, a secondary battery or more generally an electrochemical cell for energy storage, unless indicated otherwise or technically inappropriate. In particular, the battery as used herein may refer to a secondary battery, i.e., a rechargeable battery. For example, the battery may comprise one or more layers of electrodes and one or more layers of separators stacked in a specific manner. The battery may be a coin-type, cylindrical, prismatic, or pouch-type battery. Particularly, the battery may be configured to provide power to an electric vehicle. Hereinafter, a reference will be made to "a" battery, in order not to limit the subject matter to the manufacture of one particular battery. Alternatively or additionally, the battery may refer to a primary battery or non-rechargeable battery.

The material is a flowable, and/or viscous, material. The material may be also referred to as a slurry. The material may have a viscosity of 10² mPa·s or more at an atmospheric pressure (1013.25 hPa) and 25°C. More particularly, the material may have a viscosity of 103 mPa·s or more, 104 mPa·s or more, 106 mPa·s or more, 1010 mPa·s or more, or 1012 mPa·s or more at the atmospheric pressure and 25°C. An upper boundary for the viscosity may be given by the transition into the solid state, and may be at or above 1024 mPa·s at the atmospheric pressure and 25°C. Unless indicated otherwise, the viscosity may be determined using a viscosimeter according to the standard EN ISO 3219. Alternatively or additionally, the viscosity may be measured, for example, using a Stabinger viscometer SVM kinematic viscometer in accordance with ASTM 7042, at the atmospheric pressure and 25°C. The material may include any of the corresponding features described below.

The material may be or include a mixture of a liquid material and a solid material, and/or a material that is partly in a liquid state and partly in a solid state. Specifically, the material may refer to a mixture including a binder to which a solid active material, which may be provided for example as a granular and/or powder material, is admixed. The active material may be or contain, as a non-exhaustive list of examples, lithium-cobalt oxide (LCO), lithium nickel cobalt manganese oxide (NCM), lithium nickel cobalt aluminum oxide (NCA), lithium manganese oxide (LMO), lithium nickel manganese spinel (LNMO), lithium iron phosphate (LFP). The active material may additionally include graphite, pure lithium and/or silicon.

The material may include an active material that is used for forming an electrode of a battery, particularly a secondary battery. The material may include an active material that is used for forming a positive electrode or a negative electrode. The slurry may additionally contain solid conductive particles, for example carbon black and/or carbon nanotubes. The slurry may additionally contain dispersants. For the sake of simplifying the description, the terms active material and slurry may be used interchangeably hereinafter, unless indicated otherwise or technically inappropriate.

The binder may be a polymeric binder. The binder may be or include polyvinylidene fluoride (PVDF), polymethyl acrylate (PMMA), carboxymethylcellulose (CMC), polyacrylate, xanthan gum, polyethylene glycol, or styrene butadiene. The slurry may further contain one or more liquid components. The liquid component may be or include water and/or an organic solvent, such as tetrahydrofuran (THF) or N-methyl-2-pyrrolidon (NMP).

The material is extruded from the die. The extrusion process may be also referred to as deposition, in which the material is deposited on a substrate, which may be referred to as an electrode substrate to form an electrode of a battery. The electrode substrate may be a metal foil made of one or more metal materials, such as copper, nickel, or aluminum.

The die is a device that is configured for extruding the material through the opening of the die. The die may be also referred to as an ejector, injector, deposition device or extrusion device. The die is configured for extruding the material through the cavity and the opening of the die. The die may further include any of the corresponding features as described below.

The cavity may refer to a hollow space formed in the die. While the cavity may refer to a hollow space within the die, the cavity may be considered to as a structural feature of the system and/or the die wherever appropriate. Accordingly, the system and/or the die may comprise the cavity. In particular, the cavity may be formed between separate parts of the die by interposing the flow guide therebetween. The cavity may be further configured as described below.

The cavity may be shaped and dimensioned so as to receive the material. The cavity may be fluidly connected to a supply system of the material. A feed port may be provided in the cavity of the die to feed the material to the cavity of the die. The feed port may be configured to enable the material to be fed to the cavity of the die. A manifold may be formed that communicates with the cavity such that the material fed to the cavity first spreads out in the manifold and then fills the cavity. The feed port, if applicable, may be formed within the manifold. The manifold may have a shape of an elongated recess along the width direction. The manifold may have any of the corresponding features as described below.

The cavity is fluidly connected to the opening of the die. The cavity is configured (e.g., dimensioned and shaped) such to allow the material that is received in the cavity to spread towards the opening and/or to discharge from the die through the opening of the die. In particular, the cavity may fill up with the material as the material is fed to the cavity such that the material discharges from the cavity through the opening. This process may be referred to as extrusion of the material from the die and/or deposition of the material on a substrate.

The die is conf igured to extrude the material through the opening of the die in response to a flow rate and/or a pressure applied by a supply system of the material. In operation, the cavity may receive the material, i.e., be filled (partly or completely) with the material. As the cavity is filied with the material, the material may discharge from the cavity through the opening to the outside.

Herein, the opening may be two-dimensional void area, particularly between two separate parts of the die, in a front side of the die. As mentioned, the die may include two or more separate parts, which may include, for example, an upper die and a lower die, a first die half and a second die half, or a die cover and a die base, or the like. The cavity may be formed as a gap between the two or more separate parts of the die. Alternatively, the cavity may be formed as a void space inside a single-piece body of the die, and the opening may be formed at an outer surface of the die so as to expose the cavity to the outside of the die.

When viewing in the direction opposite to the principal deposition direction, the opening may have a slit-shape elongated along the width direction. The front side of the die may extend in a plane perpendicular to the principal deposition direction. Particularly, the opening and the cavity may have a same uniform height, particularly due to being formed between two separate parts of the die. Herein, a height being uniform may indicate that the height is locally invariant, i.e., remains constant in any position.

The flow guide is disposed in the cavity. The flow guide is configured to shape a flow of the material extruded by the die. The flow guide may be, partly or entirely, an integral part of the die. The flow guide is shaped and dimensioned so as to shape the flow of the material. The flow guide may also be referred to as a spacer, an interposer or a shim, and may be provided as a single-piece member to be inserted into the cavity of the die, or to be interposed between separate parts of the die. Alternatively, the flow guide may be at least partly provided as an integral part of the die in the cavity. The flow guide may include any of the corresponding features as described below, unless indicated otherwise or technically inappropriate.

The f low narrowing portion extending in the width direction so as to block the material from flowing through in the principal deposition direction. In particular, the flow narrowing portion, or the flow guide, may have a height equal to a height of the cavity such that the material does not flow over or below the flow narrowing portion. In particular, the flow narrowing portion is shaped and dimens ioned such that the mater ial in the cavity flows around the flow narrowing portion, instead of flowing through the flow narrowing portion along the principal deposition direction. Accordingly, the flow narrowing portion narrows a flow of the material extruded by the die. The general shape and geometrical and topological features of the flow narrowing portion are not limited to a specific example. Some particular examples are described below with reference to the drawings.

For example, the flow narrowing portion comprises a backside wall arranged perpendicular to the principal deposition direction (and facing in the direction opposite to the principal deposition direction) such that the material in the cavity is blocked from flowing through in the principal deposition direction. Additionally or alternatively, the flow narrowing portion may comprise a backside wall that has a sloped, tilted, bent and/or curved surface with respect to the principal deposition direction such as to block, or redirect, the flow of the material in the cavity towards the opening. Herein, the backside wall of the flow narrowing portion generally indicates an outer wall of the flow narrowing portion that faces in the direction opposite to the principal deposition direction. The flow narrowing portion may include any of the corresponding features described below, unless indicated otherwise or technically inappropriate.

The flow shaping portion extends downstream from the flow narrowing portion in the principal deposition direction. The width of the flow shaping portion is smaller than the width of the flow narrowing portion. Alternatively, the width of the flow shaping portion decreases from the width of the flow narrowing portion. In particular, the flow shaping portion may have a sidewall that extends along the principal deposition direction, or at least has a component that extends along the principal deposition direction. The sidewall of the flow shaping portion is offset from a sidewall of the flow narrowing portion, which extends along the principal deposition direction, or at least has a component that extends along the principal deposition direction, in the width direction. As such, after the material flows around the flow narrowing portion, the material may flow along the sidewall of the flow shaping portion in the cavity. Alternatively or additionally, the flow of the material out of the opening may be limited by the sidewall of the flow shaping portion. The general shape and geometrical and topological features of the flow shaping portion are not limited to a specific example. Some particular examples are described below with reference to the drawings.

With the configuration of the flow narrowing portion and the flow shaping portion as disclosed herein, the thickness profile of the material extruded by the die may be precisely controlled. In particular, the material is redirected to flow around the flow narrowing portion and afterwards the flow of the material is aligned by the flow shaping portion downstream. As such, a more distinguished thickness profile of the material deposited on a substrate may be obtained. In particular, the thickness profile of the deposited material may exhibit a steeper transition between two distinct thickness levels.

Particularly, the material may be or include an active material for manufacturing a secondary battery, especially for a positive electrode. It may be desirable that the thickness of the deposited material is reduced in one or more specific positions. In a specific example, an electrode assembly may comprise a positive electrode and a negative electrode arranged on opposite sides of a separator sheet. In such an example, it may be desirable that the thickness of the positive electrode material is smaller than a thickness of the negative electrode material on the reverse side of the separator sheet. To ensure that this requirement is fulfilled also in a position where the thickness of the negative electrode is locally reduced, it may be advantageous to reduce also the thickness of the positive electrode material in the exactly corresponding position. This may prevent an undesirable crystallization of a component of the material, in particular lithium, due to an excess of the positive electrode material compared to the negative electrode material at a same position on the reverse side.

Specifically, it may be advantageous that a loading ratio of an active material of a negative electrode to an active material of a positive electrode active material may be greater than 1.0, particularly greater than 1.03, or greater than 1.05, or greater than 1.08, or greater than 1.10, with a maximum at 1.2, at 1.3 or 1.5. A loading of a positive active material on one side of a separator sheet may be smaller than a loading of a negative active material on the opposite side, preferably by a factor of 0.85 to 0.99, or by a factor of 0.90 to 0.98, or by a factor of 0.92 to 0.97, or by a factor of 0.92 to 0.95. Here, the loading may refer to a deposited mass per unit area, e.g., g/m2.

Typically, different materials are used as active materials for negative and positive electrodes. Accordingly, the material properties, particularly viscosities and contact angles with the substrate material differ. Hence, boundaries of the active material of the positive electrode may have a different thickness profile than boundaries of the active mater ial of the negative electrode. In particular, the boundaries on both positive and negative electrodes may be shaped according to a flow behavior of the respective material on a respective substrate (which may be referred to as "sliding"). In view of this, the subject matter disclosed herein may allow for obtaining more pronounced, highly defined boundaries for deposited material. This may facilitate an accurate configuration a secondary battery. Furthermore, the subject matter disclosed herein may allow for a more efficient material usage.

In particular, a width offset between sidewalls (i.e., walls that are extending parallel or partially parallel to the principal deposition direction, or arranged perpendicular to the width direction) of the flow narrowing portion and the flow shaping portion may be set according to a spread width of the material after the deposition. The spread width may refer to a distance by which the material spreads in the width direction after discharging from the die. The spread width may be determined according to the composition and properties of the material as well as its interfacial properties with the substrate on which the material is deposited. Furthermore, the spread width may also depend on a distance between the opening of the die and the substrate and the deposition velocity (i.e., flow rate of the material through the die). The spread width may also be referred to as a sliding length. Depending on the material and the substrate, the spread width may be between 0.1 mm and 100 mm, between 0.5 mm and 50 mm, or between 1 mm and 10 mm.

Thus, the subject matter disclosed herein may allow for a more precise control of a thickness profile of a deposited material than conventional systems and methods. The deposition of the material according to a specific thickness profile on a substrate may be facilitated and improved. The combination of the flow narrowing portion and the flow shaping portion may be specifically configured for individual demands and requirements. Hence, the subject matter as disclosed herein also increases the versatility of the system for deposition of the material on a substrate. For this purpose, the flow narrowing portion and the flow shaping portion may be specifically shaped and specifically dimensioned individually as well as in relation to each other. Herein, the combination of the flow narrowing portion and the flow shaping portion may be also referred to as a flow edging portion.

The flow narrowing portion has a sidewall perpendicular to the width direction. The flow shaping portion has a sidewall perpendicular to the width direction. The sidewall of the flow shaping portion is offset from the sidewall of the flow narrowing portion in the width direction.

Accordingly, the material flowing in the principal deposition direction may first flow around the flow narrowing portion along the backside wall of the flow narrowing portion and then along the sidewall of the flow narrowing portion. Downstream of the flow narrowing portion, the material may then spread out (flow in both the principal deposition direction and the width direction) towards the sidewall of the flow shaping portion. Depending on the viscosity and interfacial properties of the material, the material may flow along the sidewall of the flow shaping portion and/or arrive at the sidewall of the flow shaping portion in a downstream position close to the opening. As such, the flow of the material may be limited and shaped by the sidewall of the flow shaping portion. As a result, a pronounced thickness profile may be obtained.

The flow guide further comprises a flow guiding portion elongated along the principal deposition direction so as to block the material from flowing through in the width direction. The flow guiding portion extends from the flow narrowing portion in the direction opposite to the principal deposition direction. The flow guiding portion may extend from an upstream side of the flow narrowing portion in the direction opposite to the principal deposition direction.

The flow guiding portion may have a uniform width that is smaller than the width of the flow narrowing portion. Alternatively or additionally, the flow guiding portion may have a sidewall extending along the principal deposition direction, or at least having a component extending along the principal deposition direction, that is offset from the sidewall of the flow narrowing portion in the width direction.

Accordingly, the flow guide may be configured to guide the material along the flow guiding portion to the flow narrowing portion. Furthermore, the flow guiding portion may be configured to enclose the material inside the cavity, particularly inside a volume that is defined by the flow guide. In particular, the flow guiding portion may provide a lateral barrier wall to keep the material inside the cavity, particularly inside the volume defined by the flow guide.

In some examples, the flow guide may comprise another flow narrowing portion, another flow shaping portion and another flow guiding portion extending from the other flow narrowing portion. In specific examples, the flow narrowing portion, the flow shaping portion and the flow guiding portion may be arranged at one lateral edge of the cavity of the die, and the other flow narrowing portion, the other flow shaping portion and the other flow guiding portion may be arranged at the opposite lateral edge of the cavity of the die so as to provide barrier walls to block the material from flowing through in the width direction. Here, lateral edges may refer to sides of the cavity of the die with respect to the width direction.

The flow guide further comprises a base portion elongated in the width direction. The flow guiding portion extends from the base portion in the principal deposition direction to the flow narrowing portion. In some examples, the flow guiding portion has a uniform width that is smaller than the width of the flow narrowing portion.

In some examples, the die comprises an upper die comprising a lower end face. The die may also comprise a (corresponding, or complementary) lower die comprising an upper end face. The lower end face of the upper die and the upper end face of the lower die may be configured (e.g., dimensioned and shaped so as) to rest on each other. As mentioned above, the die may comprise two separate parts, wherein the cavity is formed between the two separate parts of the die.

The expressions upper and lower may depend on the arrangement of the die with respect to the gravitational pull. Since a flowable or viscous material may be used, it may be advantageous that an end face is provided on which the material can flow and spread. The upper end face of the lower die may provide a surface to support the material and on which the material can flow and spread. The opposite end face, that is the lower end face of the upper die, may provide an upper cover to limit the volume of the cavity upward. The lower end face of the upper die and the upper end face of the lower die may be impenetrable for the material (except for a feed port through which the material may be feed to the cavity as described above).

The cavity may be formed by the flow guide being interposed between the end faces of the upper die and the lower die. The lower end face of the upper die and the upper end face of the lower die may have a general flat shape and corresponding sizes (in the principal deposition direction and the width direction) such that the cavity formed therebetween has a uniform height. The opening of the die may be formed accordingly as a slit-shaped, two-dimensional gap in a front side of die.

In such a configuration, the control of the flow of the material extruded by the die may be further facilitated. Also, such a configuration may allow for a versatile configuration of the secondary battery manufacturing method and system.

In some examples, the system further comprises a manifold formed in the die and communicating with the cavity. The flow guide may surround the manifold at least on a backside of the manifold opposite to the opening of the die and on lateral sides of the manifold with respect to the width direction.

Here, the expression surround is not limited to a physical contact with the manifold. Instead, the flow guide may be provided so as to block the material fed to the cavity through the manifold from flowing through in the width direction and in the direction opposite to the principal deposition direction.

For example, the flow guide may comprise a base portion as described above. Particularly, the base portion may be located between a backside edge (that is opposite to the front side where the opening of the cavity is formed) of the cavity and the manifold to block the material from flowing through to the backside of the cavity. Additionally or alternatively, the flow guide may comprise two or more flow guiding portion as described above. The flow guiding portions are configured to block the material from flowing through to the lateral sides of the cavity. Accordingly, the flow guide may be conf igured to enclose the mater ial in the cavity, particularly in a volume defined by the flow guide, as surrounded by the base portion and the flow guiding portions.

In some examples, at least a part of the flow narrowing portion is positioned between the opening of the die and the manifold. Specifically, the flow narrowing portion may be arranged such that the aforementioned backside wall of the flow narrowing portion faces the manifold. In particular, the flow narrowing portion may extend from the flow guiding portion in the width direction towards a centerline of the cavity, which is parallel to the principal deposition direction, such that the flow narrowing portion also surrounds the manifold by being between the manifold and the opening of the die.

The flow guide further comprises a flow separating portion elongated along the principal deposition direction so as to block the material from flowing through in the width direction. The flow separating portion is spaced from the flow narrowing portion.

Herein, it is distinguished between the flow guiding portion that extends from the flow narrowing portion in the direction opposite to the principal deposition direction and the flow separating portion that is spaced from the flow narrowing portion. In particular, the flow separating portion is spaced from the flow narrowing portion in the width direction. The separating portion may have a length and a width according to the properties of the material and individual requirements to the deposition.

In some examples, the flow separating portion may extend from the base portion in the principal deposition direction. As shown in connection with the drawings below, the flow guiding portion and the flow separating portion may both extend from the base portion in the principal deposition direction, but from different positions of the base portion spaced from one another in the width direction.

In some examples, a distance between the flow shaping portion and the opening of the die is smaller than a distance between the flow separating portion and the opening of the die. In other words, the flow shaping portion is positioned closer to the opening than the flow separating portion does. The flow separating port ion has a length so as to terminate at a position, while the flow shaping portion extends further towards, and/or arranged closer to, the opening of the die.

In some examples, the flow guide may comprise multiple flow separating portions each configured as described above. By having one or more flow separating portions, the flow of the material may be controlled so as to provide a specific thickness profile on a substrate. For example, each of the flow separating portion may reduce the loading of the material in a position corresponding to the position of the flow separating portion. By using one or more flow separating portions having a reduced height (i.e., distanced farther from the opening than the flow shaping portion), a degree of the reduction of the loading of the material deposited on a substrate may be precisely controlled.

In some examples, the flow narrowing portion and the flow shaping portion together have a shape of a capital letter T or a capital letter L in a plan view perpendicular to the principal deposition direction and perpendicular the width direction. In other words, the plan view refers to a view along the height direction. Here, the capital letter T may be upside down, i.e., the vertical bar of the capital letter T may be arranged closer to the opening of the die and the horizontal bar of the capital letter T may be arranged closer to the backside of the die.

More specifically, the flow narrowing portion may form the horizontal bar of the capital letter T, and the flow shaping portion may form the vertical bar of the capital letter T. Alternatively, the flow narrowing portion may form the horizontal bar of the capital letter L, and the flow shaping portion may form the vertical bar of the capital letter L. The positions, lengths and widths of the flow narrowing portion and flow shaping portion may be adjusted according to the material to be deposited and the product requirements.

The flow guide further comprises a further flow narrowing portion and a further flow shaping portion. The further flow narrowing portion extends in the width direction so as to block the material from flowing through in the principal deposition direction. The further flow shaping portion extends downstream from the further flow narrowing portion in the principal deposition direction. A width of the further flow shaping portion is smaller than, or decreases from, a width of the further flow narrowing portion. The further flow narrowing port ion is spaced from the flow narrowing portion, particularly in the width direction.

As such, the flow guide of the system disclosed herein comprises a first flow narrowing portion, which is the flow narrowing portion described above, and a second flow narrowing portion, which is the further flow narrowing portion. The flow guide comprises a first flow shaping portion, which is the flow shaping portion described above, and a second flow shaping portion, which is the further flow shaping portion. The guide further comprises a further flow guiding portion, that is provided as described above with respect to the flow guiding portion. Accordingly, the system comprises two sets of flow narrowing portion, flow shaping portion and flow guiding portion. The two sets are arranged at the opposite lateral edge of the cavity of the die in the above-described manner. The two sets together with the base portion described above may partially surround the manifold which is described above, thereby containing the material inside the cavity, particularly inside a volume defined by the flow guide.

In some examples, the flow guide may further comprise a set of a third flow narrowing portion, a third flow shaping portion and a third flow guiding portion that are each configured in the manner as described above with respect to the (first) flow narrowing portion, the (first) flow shaping portion and the (first) flow guiding portion. The flow guide, or the system, may further comprise more sets of additional flow narrowing portion, flow shaping portion and flow guiding portion configured in the above-described manner.

By the use of multiple sets of flow narrowing portion, flow shaping portion and flow guiding portion, the thickness profile of the deposited material can be adjusted in a more sensitive manner. Accordingly, the versatility of the subject matter may be further increased.

The flow narrowing portion and the further flow narrowing portion are arranged at outermost positions, with respect to the width direction, inside the cavity of the die. As such, the flow narrowing portion and the further flow narrowing portion may provide of lateral bordering walls on the opposite lateral edges of the cavity. Accordingly, the flow narrowing portion and the further flow narrowing portion may contribute to containing the material inside the cavity, particularly inside a volume defined by the flow guide.

In some examples, a width of the further flow narrowing portion is different from the width of the flow narrowing portion. Alternatively or additionally, a length of the further flow narrowing portion is different from a length of the flow narrowing portion. As such, an asymmetrical thickness profile of the material deposited on a substrate may be obtained. Thus, the versatility of the subject matter disclosed herein may be increased.

In alternative examples, the width of the flow narrowing portion and the width of the further flow narrowing portion are equal, and the length of the flow narrowing portion and the length of the further flow narrowing portion are equal. This may allow for obtaining a symmetrical thickness profile of the material deposited on a substrate.

The flow guide further comprises two flow reducing portions each extending from the base portion in the principal deposition direction and arranged laterally offset from the flow separating portion. The flow reducing portions each have a length in the principal deposition direction that is smaller than a length in the principal deposition direction of the flow separating portion.

According to a further aspect, there is provided a secondary battery manufacturing system that comprises the system as described above, or any of its examples. The material maybe an active material, particularly a positive electrode active material, for manufacturing a secondary battery.

As such, the system for depositing the material as described above may be explicitly used for manufacturing a battery, particularly a secondary battery. The mater ial may be as described above and contain an act ive mater ial to manufacture an electrode of a battery.

According to a further aspect, a secondary battery manufacturing method is provided. The method uses (i.e., may be carried out by) the system as described above or any of its examples. According to the method, an active material, particularly a positive electrode active material, is fed to the die such that the active material is received in the cavity of the die and discharges through the opening of the die. This may be referred to as deposition (on a substrate as described above) or extrusion (i.e., pressing the material through the die by applying a pressure or volume flow), and may be performed as described in detail above.

Any of the features described above with respect to the system may also applicable to the second battery manufacturing method even if not explicitly formulated as a procedural feature, unless technically inappropriate.

In some examples of the method, the material discharged through the opening of the die may be deposited on a first side of an electrode substrate. This may be also referred to as coating a first side of the electrode substrate with the material discharging through the opening of the die.

In some examples of the method, the material deposited on the first side of the electrode substrate may be dried. This may be also referred to as drying the material deposited on the first side of the electrode substrate.

In some examples of the method, optionally, after drying the drying the material deposited on the first side of the electrode substrate, the electrode substrate may be turned around. This may be also referred to as turning around the electrode substrate such that the material deposited on the first side is upside down and/or a second side opposite to the first side is up.

In some examples of the method, the material or other material may be deposited through the die on the second side of the electrode substrate. This may be also referred to as depositing the material or other material through the die on the second side of the electrode substrate. Afterwards and optionally, the material or the other material deposited on the second side of the electrode substrate may be dried.

The second battery manufacturing system and method each achieve any of the technical effects and advantages described above with respect to the system for depositing a material.

According to a further aspect, a system for depositing a material may be provided. The system comprises a die and a flow guide. The die comprises an opening and a cavity. The cavity communicates with the opening. The die is configured to extrude the material in a principal deposition direction through the opening. The flow guide is disposed in the cavity of the die. The flow guide is configured to shape a flow of the material extruded by the die.

In the system, the flow guide comprises a flow guiding portion and a flow edging portion. The flow guiding portion is elongated in the principal deposition direction. The flow edging portion extends from the flow guiding portion in the width direction. A width of the flow edging portion is different from, particularly greater than, a width of the flow guiding portion.

Further in the system, the flow edging portion is recessed at a corner distal to the flow guiding portion and downstream with respect to the principal deposition direction. For example, the flow edging portion is recessed at the corner by a recess width and a recess height, that is by a rectangular recess shape. In other examples, the flow edging portion is recessed at the corner by a circular sector recess shape with a recess diameter. In other examples, the flow edging portion is recessed at the corner by a triangle recess shape.

According to another aspect, a battery, in particular a secondary battery, is disclosed that is produced using the system as disclosed herein and/or by the method as disclosed herein.

In some examples, the battery comprises an active material deposited such that a profile of the deposited active material performs a sigmoid curve in a boundary region. Furthermore, the profile of the deposited active material may be approximately constant in a central region.

In some examples, the boundary region may be an outermost region of the deposited active material in a width direction, wherein a widthwise extent of the boundary region is 1 mm to 15 mm, or 2 mm to 10 mm, or 3 mm to 8 mm, from an outermost position of the deposited active material.

In some examples, the central region may be a region of the deposited active material in which the profile of the deposited active material is approximately constant, in particular wherein a fluctuation of the profile of the deposited active material is 0.1% to 5%, or 0.1% to 4%, or 0.1% to 3%, relative to a maximum value of the profile. The central region may be continuously adjacent to the boundary region and located more distant, in the width direction, from said outermost position of the deposited active material than the boundary region. The central region may be a region of the deposited active material in which a fluctuation of the profile of the deposited active material is 0.1% to 5%, or 0.1% to 4%, or 0.1% to 3%, relative to a maximum value of the profile. Such a fluctuation may be considered as approximately constant.

The battery comprises an active material deposited such that the profile of the deposited active material has a depression with a local maximum in the center interposed between two minima.

In some examples, a difference of the amount of the deposited material between the local maximum and at least one of the two minima may be 0.1% to 10%, or 0.5% to 8%, or 1% to 5%, relative to the value of the maximum.

In some examples, the profile of the deposited active material may have a depression and at least one shoulder formed by a respective maximum laterally adjacent to the depression. The profile of the deposited active material may be approximately constant outwardly from the at least one shoulder.

In some examples, a difference of the amount of the deposited material between the respect ive maximum and an outward area of constant profile may be 0.1% to 10%, or 0.5% to 8%, or 1% to 5%, relative to the value of the respective maximum.

The battery as disclosed herein may be provided with a characteristic deposition profile of an active material, which may be for a positive and/or negative electrode. With such deposition profile, a distinctive boundary region of the deposited active material may be obtained in which a loading or deposition thickness of the active material is significantly reduced in comparison to a conventional battery. In addition, a distinctive central region of the deposited active material may be obtained in which a loading or deposition thickness of the active material is more uniform than in a conventional battery. Accordingly, the energy density of a battery may be increased.

### [Advantageous Effects]

The accompanying drawings illustrate some particular examples and are intended to help understanding the present invention. Herein and in the drawings, a same reference sign or a series of reference signs may be used in different examples to indicate a same, similar or analogical element. Generally, a repetitive description is omitted hereinafter. Unless indicated otherwise or technically inappropriate, the examples described below with reference to the drawings can include any of the features described above. Furthermore, the examples described below with reference to the drawings can include any of the features described with reference to the respectively previous example, unless indicated otherwise or technically inappropriate, for the sake of brevity and efficiency of the description. It is noted that the drawings may be not to scale. Particular features and aspects may be enlarged or reduced to be clearly displayed.

### [Description of Drawings]

FIG. 1A and 1B schematically show a perspective view and a cross-sectional side view of a die according to an example.
FIG. 2A and 2B schematically show plan views of different examples of a flow guide.
FIG. 3A and 3B schematically show a cross-sectional plan view and a perspective view of a system according to an example.
FIG. 4A and 4B each shows schematically a cross-sectional plan view of a system according to an example.
FIG. 5A and 5B schematically show a cross-sectional plan view and a perspective view of a system according to an example.
FIG. 6A and 6B each shows schematically a cross-sectional plan view of a system according to an example.
FIG. 7 shows profiles of a deposited material according to examples and a comparative example.
FIG. 8 shows a profile of a deposited material according to an example.

### [Best Mode]

A system for depositing a material according to claim 1.

A secondary battery manufacturing system according to claim 8, comprises the system of any of claims 1-7, wherein the material is an active material, particularly a positive electrode active material, for manufacturing a secondary battery.

A secondary battery manufacturing method according to claim 9.

A battery according to claim 10.

### [Mode for Invention]

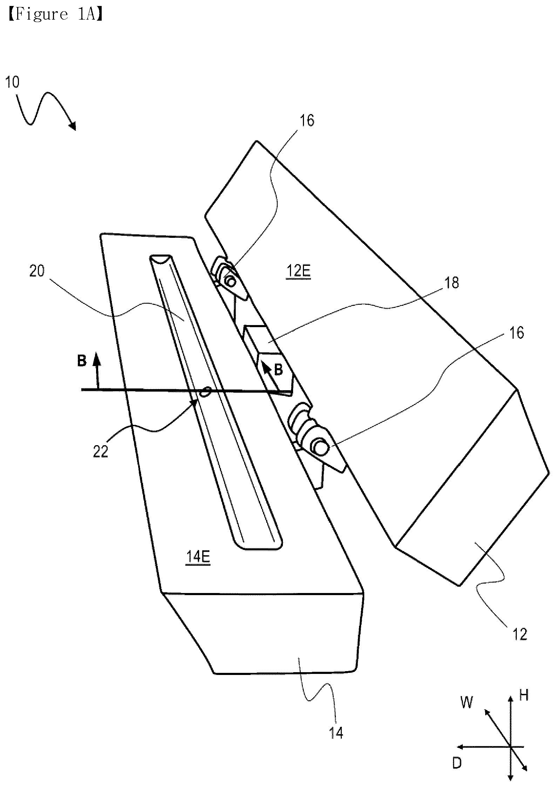

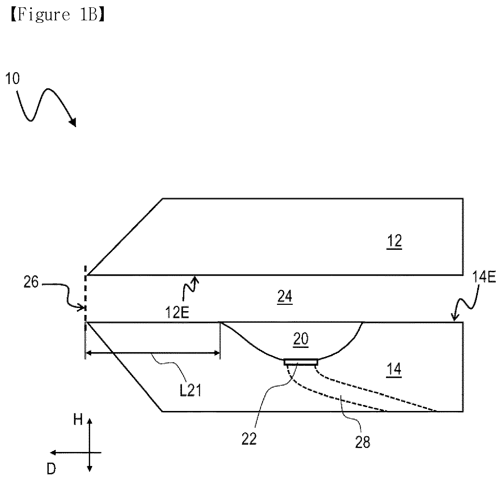

FIG. 1A schematically shows a perspective view of an example of a die 10. FIG. 1B schematically shows a cross-sectional side view of the die 10 taken along B-B in FIG. 1A. Herein and in the following diagrams, a principal deposition direction D, a width direction W and a height direction H are indicated for reference. The directions D, W and H are as described above. As described above, the principal deposition direction D is directional, while the width direction W and the height direction H are bi-directional. Accordingly and as described above, the expression downstream used herein may refer to a direction along with the principal deposition direction D, while the expression upstream may indicate a direction opposite to the principal deposition direction D.

The die 10 shown in FIG. 1A and 1B can be part of the system and/or used to carry out the method disclosed herein. The die 10 comprises an upper die 12 and a lower die 14. The upper die 12 and the lower die 14 are provided as separate parts of the die 10. The upper die 12 has a lower end face 12E, which is referred to hereinafter as an end face 12E for simplicity. The lower die 14 has an upper end face 14E, which is referred to hereinafter as an end face 14E for simplicity. The end faces 12E and 14E are dimensioned (e.g., to have a same size) and shaped (e.g., to be flat along a plane perpendicular to the height direction H) so as to complement each other. In other examples not explicitly shown, the die may be provided as a single-piece device with a cavity inside and an opening communicating to the cavity.

Optionally, as shown in FIG. 1A, the upper die 12 and the lower die 14 are mechanically connected via hinges 16. Accordingly, the upper die 12 and the lower die 14 are connected in a pivotable manner in relation to each other and around a pivot axis that runs through the hinges 16. The pivot axis may be parallel to the width direction W.

Further optionally, as shown in FIG. 1A, the die 10 may comprise an arrest member 18 on a backside of the die 10. Herein, the backside may refer to a side surface perpendicular to the principal deposition direction D and facing upstream. In the example in FIG. 1A, the arrest member 18 is provided at a backside of the lower die 14. The arrest member 18 provides a surface perpendicular to the principal deposition direction D and facing downstream, against which a flow guide may rest. Accordingly, the arrest member 18 may be helpful in arranging and aligning the flow guide in a cavity of the die 10.

The die 10 further comprises a manifold 20 and a feed port 22 arranged inside the manifold 20. The manifold 20 is provided as an elongated recess along the width direction W and a depth in the height direction. The manifold 20 may be recessed into the end face 14E of the die 10, particularly of the lower die 14. In the example of FIG. 1A and best shown in the cross-section in FIG. 1B that is taken along B-B in FIG. 1A, the manifold 20 has a curved lower surface recessed into the lower die 14. In other examples not explicitly shown, the manifold may have any other suitable shape, for example, a polygonal shape, or a shape of a cylinder part, an ellipsoid part, a spherical part, or a combination thereof.

As shown in FIG. 1B, the die 10 comprises a cavity 24 that is formed inside the die 10. While the cavity as used herein may refer to a void space formed in the die 10, the cavity 24 is considered as a part of the die 10 hereinafter for the sake of simplicity. In the example shown in the drawings, the cavity 24 is formed as a gap between the upper die 12 and the lower die 14. Particularly, the cavity 24 may be formed between the end faces 12E and 14E of the upper die 12 and the lower die 14, which may be dimensioned (e.g., to have a same size) and shaped (e.g., to be flat along a plane perpendicular to the height direction H) so as to complement each other as described above.

In FIG. 1A and 1B, the die 10 is configured to extrude a material (not shown in the drawings) through the opening 26. For example, the material may be fed through the feed port 22 to the cavity 24. For this purpose, optionally, the die 10 may further comprise a duct 28 fluidly connecting the feed port 22 with a supply system (not shown in the drawings) that supplies the die 10 with the material. The material may be as described above, and particularly an active electrode material of a secondary battery.

The cavity 24 is configured to receive the material. As the material is fed to the cavity 24, the cavity 24 fills up with the material to such an extent that the material discharges from (the cavity 24 of) the die 10 through the opening 26 in the principal deposition direction D. This process may be referred to as extrusion and/or deposition of the material by the die 10. The flow of the material in the cavity 24 may be driven by a pressure under which the material is fed to the cavity 24 by the supply system.

As shown in FIG. 1B, the die 10 further comprises an opening 26 that is formed on a front side (not labelled) of the die 10. In the example shown in the drawings, the opening 26 is formed as a gap between the upper die 12 and the lower die 14 in the front side of the die 10. More generally, the opening may be formed in the front side of the die 10. The front side may refer to a side surface of the die 10 perpendicular to the principal deposition direction D and facing downstream.

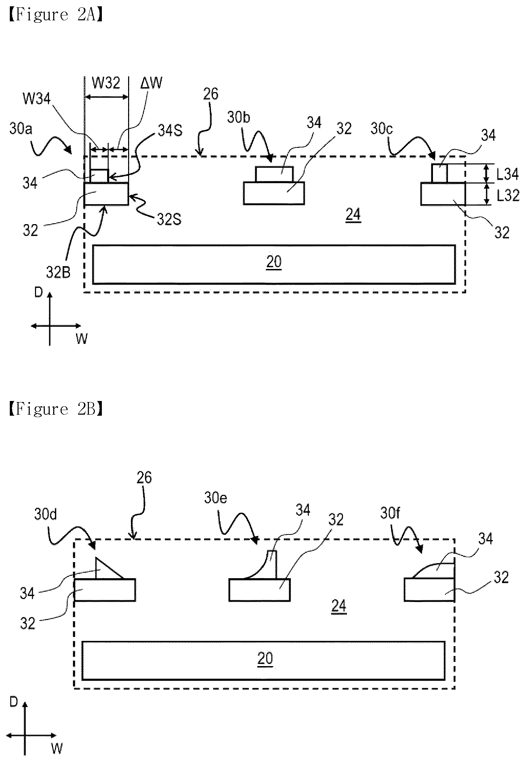

FIG. 2A and 2B show schematic plan views of different examples of a flow guide 30a-30f. These examples do not include all features of the invention. Any of the flow guides 30a-30f shown herein may be part of the system and/or used to carry out the method disclosed herein. It is noted that the flow guides 30a-30f are selected examples to demonstrate how a flow guide in terms of the subject matter disclosed herein may look like. The flow guide comprising the flow narrowing portion and the flow shaping portion configured according to the claimed subject matter is not limited to the specific examples depicted in the drawings.

Each of the flow guides 30a-30f is arranged in the cavity 24 of the die 10. The flow guide 30a-30f is configured to shape a flow of the material extruded by the die 10. Each of the flow guides 30a-30f comprises a flow narrowing portion 32 and a flow shaping portion 34. A height of each of the flow guide 30a-30f in the height direction H may be equal to a height of the cavity 24. In particular, the height of the flow guide 30 and the height of the cavity 24 may be uniform, i.e., constant in any position. In some examples as described above, the cavity 24 may be formed by interposing the flow guide 30a-30f between separate parts of the die 10, such as the upper die 12 and the lower die 14. The flow narrowing portion 32 and the flow shaping portion 34 may also have a respective height that is equal to the height of the cavity 24. Hence, the material may not flow over or below the flow guide 30, particularly over or below the flow narrowing portion 32 and the flow shaping portion 34.

Referring to the top left example of the flow guide 30a in FIG. 2A, the flow narrowing portion 32 of the flow guide 30a extends in the width direction W so as to block the material from flowing through in the principal deposition direction D. Particularly, the flow narrowing portion 32 comprises a backside wall 32B perpendicular to the principal deposition direction D and facing upstream (in other words, the backside wall 32B extends parallel to the width direction W and the heigh direction H). The flow narrowing portion, particularly its backside wall 32B, is capable of blocking the material from flowing through in the principal deposition direction D.

Further, the flow narrowing portion 32 of the flow guide 30a comprises a sidewall 32S that extends along the principal deposition direction D and the height direction H. Accordingly, the material that flows out from the manifold 20 in the cavity 24 may flow towards the backside wall 32B of the flow narrowing portion 32. The material cannot penetrate the flow narrowing portion 32 nor flow over or below the flow narrowing portion 32, and is thus blocked from flowing through in the principal deposition direction. The material hence flows around the flow narrowing portion 32 in the width direction along the backside wall 32B and then in the principal deposition direction D along the sidewall 32S.

The flow shaping portion 34 extends downstream from the flow narrowing portion 32 in the principal deposition direction. A width W34 of the flow shaping portion 34 is smaller than a width W32 of the flow narrowing portion 32. Further, the sidewall 34S is offset from the sidewall 32S of the flow narrowing portion 32 in the width direction W. Accordingly, the material flowing in the principal deposition direction D along the sidewall 32S flows towards a sidewall 34S of the flow shaping portion 34. The material may be viscous and flowable as described above, and therefore capable of flowing towards the sidewall 34S of the flow shaping portion 34 after passing the flow narrowing portion 32. The flow (a spread, or sliding as described above) of the material in the width direction W may be restricted by the sidewall 34S of the flow shaping portion 34. Accordingly, the combination of the flow narrowing portion 32 and the flow shaping portion 34 may result in a more sharp and more well-defined boundary of the deposited material being formed in a position corresponding to the sidewall 34S of the flow shaping portion 34. This allows for a precise configuration of a thickness profile of the material deposited on a substrate. The technical effects and advantages may be as described above.

The same or similar principle may apply to any of the other examples of the flow guide 30b to 30f. In FIG. 2A and 2B, the backside wall 32B, the sidewall 32S and the sidewall 34S are labelled only once with the flow guide 30a for the sake of intelligibility. Also, the widths W32 and W34 are labelled only once with the flow guide 30a for the sake of intelligibility. For the same reason, lengths L32 and L34 (described below) are labelled only once with the flow guide 30c.

The flow guide may be arranged anywhere in the cavity. Particularly, the flow guide may be arranged at lateral edges of the cavity 24 of the die 10. Referring to the examples shown in FIG. 2a and 2B, while the examples of the flow guide 30a, 30c, 30d and 30f are arranged in outermost positions in the cavity 24 with respect to the width direction W, the examples of the flow guide 30b and 30e are each arranged in a central position in the cavity 24 with respect to the width direction W. In some examples, the system disclosed herein may comprise two flow guides, such as the flow guides 30a, 30c, 30d and 30f, arranged in outermost positions in the cavity 24 of the die 10. These outermost positions may be referred to as lateral edges of the cavity 24 or of the die 10. Alternatively or additionally, the system may comprise one or more flow guides, such as the flow guides 30b and 30e, arranged between the lateral edges of the cavity 24 of the die 10.

Furthermore, the widths W32, W34 of the flow narrowing portion 32 and the flow shaping portion 34 may be adapted according to the material, the deposition process and individual requirements. Referring to the examples in FIG. 2A, a ratio of the width W34 of the flow shaping portion 34 to the width W32 of the flow narrowing portion 32 may be variable. In particular, an offset between the sidewall 32S of the flow narrowing portion 32 and the side 34S of the flow shaping portion 34 may adapted to a spread width as described above.

Similarly, a length L32 of the flow narrowing portion 32 and a length L34 of the flow shaping portion 34 may be variable according to the material, the deposition process and individual requirements, as schematically demonstrated at the examples of the flow guide 30a-30f.

Referring to FIG. 2B, the flow shaping portion 34 may have any other shape than a rectangular block as shown in FIG. 2A. Although not shown explicitly in the drawings, the flow narrowing portion 32 is not limited to a rectangular block shape but may have any other shape that is suitable to block the material from flowing through in the principal deposition direction D. Any of the examples of the flow guide 30d-30f as shown in FIG. 2B may also be capable of achieving the technical effects as described above. Furthermore, the different shapes and sizes as exemplarily shown in FIG. 2A and 2B may result in different boundary shapes of the material deposited on a substrate. Hence, the subject matter disclosed herein may allow for a fine configuration of the thickness profile, particularly in the boundary regions, of the material deposited on a substrate.

In an alternative nomenclature, the flow guide may be considered to comprise a block corresponding to a combination of the flow narrowing portion 32 and the flow shaping portion 34, which may be collectively referred to as a flow edging portion. The flow edging portion may be considered to be recessed by a recess width and a recess length. The offset between the sidewalls 32S, 34S of the flow narrowing portion 32 and the flow shaping portion 34 in the width direction W may be considered as the recess width. The offset between front walls (not labelled) of the flow narrowing portion 32 and the flow shaping portion 34 may be considered as the recess length. Similarly, regarding the examples shown in FIG. 2B, the flow edging portion may be considered to be recessed by a polygonal shape, a circular shape, an ellipsoidal shape, or a combination thereof by respective characteristic lengths. The technical effects may be as described above.

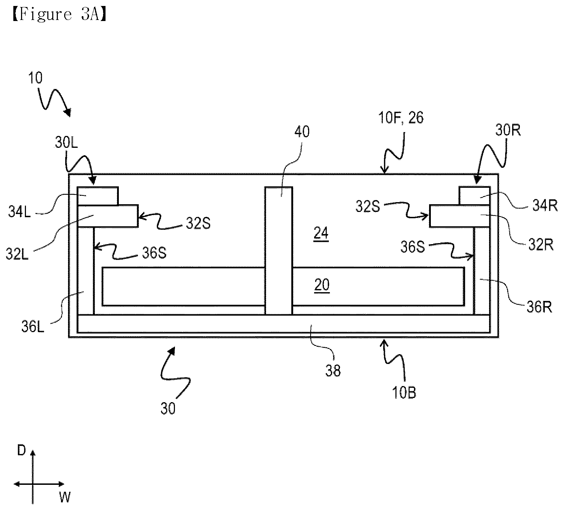

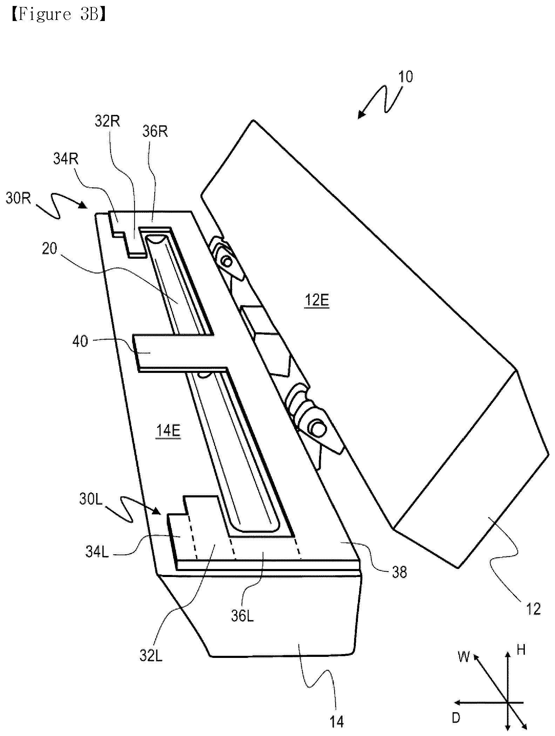

FIG. 3A shows a schematic cross-sectional plan view of a system. FIG. 3B shows a schematic perspective view of the system. The system comprises a die 10 comprising a cavity 24 and an opening 12 in the above-described manner. The systems illustrated in FIG. 3A and FIG. 3B do not include all features of the invention. The die 10 has a front side 10F and a backside 10B opposite to each other in the principal deposition direction. The die 10 further comprises a manifold 20 as described above.

FIG. 3B shows the die comprising an upper die 12 and a lower die 14 with a respective end face 12E, 14E in the above-described manner. As such, the view shown in FIG. 3A, may be a plan view with the upper die 12 opened or removed.

The system comprises a flow guide 30 that may be configured as described above. Particularly, the flow guide 30 in FIG. 3A and 3B has a first flow narrowing portion 32L, a first flow shaping portions 34L and a first flow guiding portion 36L that are conf igured and arranged in the above-described manner . The first flow narrowing portion 32L, the first flow shaping portions 34L and the first flow guiding portion 36L form a first prong 30L, which may be referred to as a left prong 30L. Similarly, the flow guide 30 comprises a second flow narrowing portion 32R, a second flow shaping portions 34R and a second flow guiding portion 36R that are configured and arranged in the above-described manner . The second flow narrowing port ion 32R, the second flow shaping portions 34R and the second flow guiding portion 36R form a second prong 30R, which may be referred to as a right prong 30R. Here, the expressions left and right merely refers to the orientation as shown in FIG. 3A and 3B with reference to the principal deposition direction.

The flow guide 30 in FIG. 3A and 3B further comprises a base portion 38 elongated in the width direction W and arranged between the backside 10B of the die 10 and the manifold 20. As such, the base portion 38 may be configured to block the material from flowing through in a direction opposite to the principal deposition direction, particularly to leak to the backside 10B of the die 10.

The first and second flow guiding portions 36L and 36R, and thus the left prong 30L and the right prong 30R, each extend from the base portion 38 in the principal deposition direction to the respective flow narrowing portion 34L and 34R. The first guiding portion 36L and the second flow guiding portion 36R each have a sidewall 36S that is offset from a sidewall 32S of the first narrowing portion 32L and the second narrowing portion 32R, respectively, in the width direction W. In particular, the first and second flow guiding portions 36L and 36R have a width that is smaller than the respective flow narrowing portion 32L and 32R. As such, the material flowing from the manifold 20 and spreading out in the cavity 24 may flow along the sidewalls 36S of the flow guiding portions 36L and 36R and then to the flow narrowing portion 32L and 32R to be shaped in the above-described manner.

The prongs 30L and 30R are capable of blocking the material from flowing through in the width direction W. Since the prongs 30L and 30R are connected to the base portion 38, the manifold 20 is surrounded by the flow guide 30 at least on a backside towards the backside 10B of the die and on lateral sides with reference to the width direction W. In addition, the flow narrowing portion 32L and 32R extend between a portion of the manifold 20 and the opening 26. Accordingly, the manifold 20 is surrounded by the flow guide 30 partially also on a front side facing to the opening 26.

In FIG. 3A and 3B, the left prong 30L and the right prong 30R are illustrated to have different sizes and shapes. This is merely an example. In other examples, the left prong 30L and the right prong 30R may have a same shape and a same size, and arranged in mirrored manner with respect to a centerline of the die parallel to the principal deposition direction. In further examples, the first flow narrowing portion 32N and the first flow shaping portion 34L may be configured as described above, particularly as depicted in FIG. 2A and 2B. Similarly, the second flow narrowing portion 32R and the second flow shaping portion 34R may be configured as described above, particularly as depicted in FIG. 2A and 2B.

The flow guide 30 in FIG. 3A and 3B further comprises, optionally, a flow separating portion 40 that protrudes from the base portion 38. The flow separating portion 40 is arranged in a position spaced from the flow narrowing portions 32L and 32R in the width direction. The flow separating portion 40 is spaced from the prongs 30L and 30R. The flow separating portion 40 may have an elongated shape along the principal deposition direction. The flow separating portion 40 may be configured to separate the flow of the material extruded by the die 10. For example, the flow separating portion 40 may result in a reduction of a loading (i.e., coating weight per area, or deposition thickness) of the material deposited on a substrate. A width and/or a length of the flow separating portion 40 may be adapted to the properties of the material, product requirements and process specifications. In particular, the length of the flow separating portion 40 may be adapted in relation to the size and arrangement of the first flow narrowing portion 32L (and/or the second flow narrowing portion 32R) and the first flow shaping portion 34L (and/or the second flow shaping portion 34R).

The system shown in FIG. 3A and 3B may function in the manner described above. The system shown in FIG. 3A and 3B may further include any of the features described above, unless indicated otherwise or technically inappropriate.

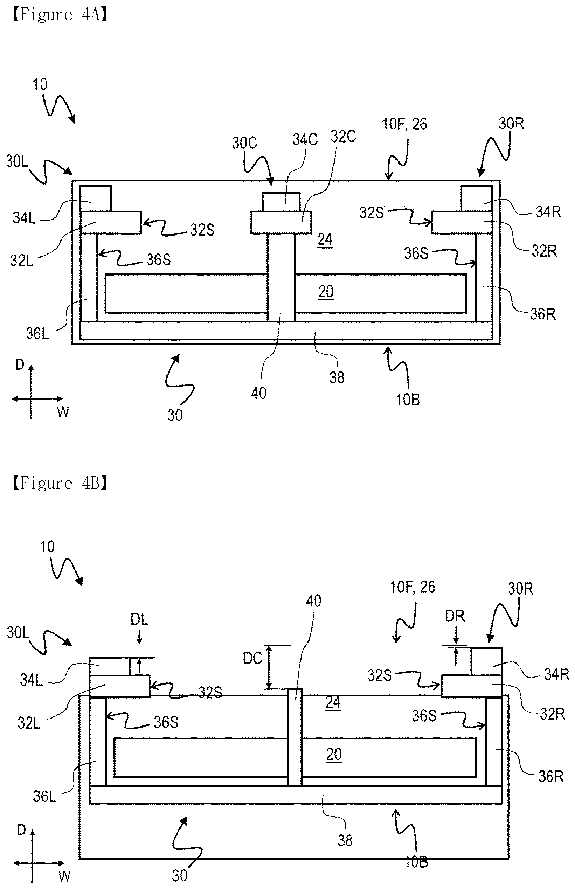

FIG. 4A and 4B each shows schematically a cross-sectional plan view of a system according to an example. The example shown in FIG. 4A may include all the features of the example of FIG. 3A and 3B, except that an additional flow edging portion 30C is provided between the left prong 30L and the right prong 30R. The example does not include all features of the invention. The additional flow edging portion 30C includes an additional (central) flow narrowing portion 32C and an additional (central) flow shaping portion 34C, which may each be configured and function as described above.

The example shown in FIG. 4B may include all the features of the example of FIG. 3A and 3B, except that the flow separating portion 40 in FIG. 4B has a reduced length such that the length of the flow separating portion 40 is adapted in relation to the size and arrangement of the first flow narrowing portion 32L (and/or the second flow narrowing portion 32R) and the first flow shaping portion 34L (and/or the second flow shaping portion 34R) such that a distance DC between the flow separating portion 40 and the opening 26 is larger than a distance DL (and/or DR) between the first flow shaping portion 34L (and/or the second flow shaping portion 34R) and the opening 26. Additionally or alternatively, the example of the flow separating portion 40 in FIG. 4B may have a reduced width that is smaller than the width of the flow guiding portions 36L and 36R. As such, the reduction of the loading of the material may be finely adjusted.

In the example in FIG. 4B, the first flow shaping portion 34L and the second flow shaping portion 34R have different lengths, thereby resulting in different distances DL and DR. This is an example only. In other examples not explicitly shown, the different distances DL and DR may result from different shapes and/or sizes of the first flow narrowing portion 32L, the second flow narrowing portion 32R, the first flow guiding portion 36L and/or the second flow guiding portion 36R.

Moreover, in the example in FIG. 4B, the first prong 30L and the second prong 30R are different in shape and size. This may result in different thickness profiles of the deposited material in boundary areas with respect to the width direction. In the following examples, the left prong 30L and the right prong 30R may have the same size and shape, without being limited hereto.

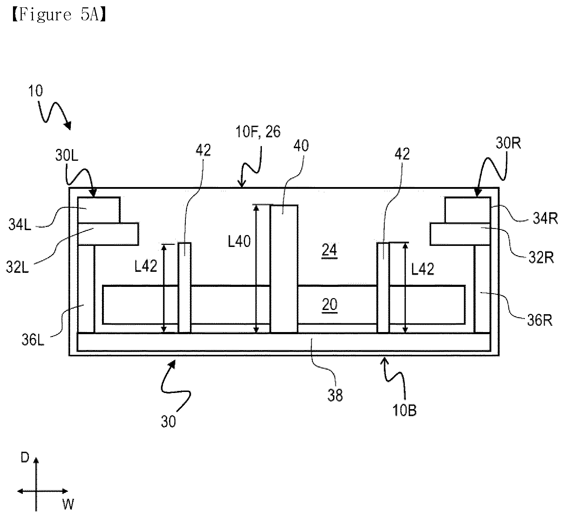

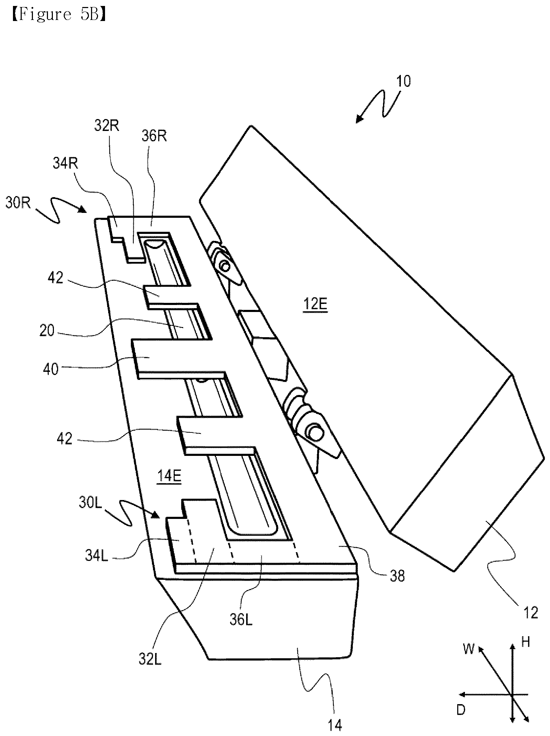

FIG. 5A and 5B schematically show a cross-sectional plan view and a perspective view of a system according to an example. The example shown in FIG. 5A and 5B may include all the features of the example of FIG. 3A and 3B, except that the flow guide 30 of the example in FIG. 5A and 5B in addition comprises two flow reducing portions 42. As shown in FIG. 5A and 5B, the flow reducing portions 42 each extend from the base portion 38 in the principal deposition direction.

The flow reducing portions 42 each have a length L42 that is smaller than a length L40 of the flow separating portion 40. As such, the flow reducing portions 42 may be suited to slightly reduce the thickness of the material deposited on a substrate in positions corresponding to the positions of the flow reducing portions 42. In particular, the flow reducing portions 42 may be configured to reduce the thickness of the material deposited on a substrate in corresponding positions to a smaller extent than the flow separating portion 40 does. For example, the flow separating portion 40 may be used to form a gap in the width direction between areas of deposited material on a substrate, while the flow reducing portions 42 may be used to reduce the thickness of the deposited material to a minor extent.

Such different thickness reduction may be exploited to provide a material-dependent, finely tuned thickness profile. This may be particularly useful for a deposition of a positive electrode active material of a secondary battery in relation to a deposition of a negative electrode active material on an opposite side of a separator.

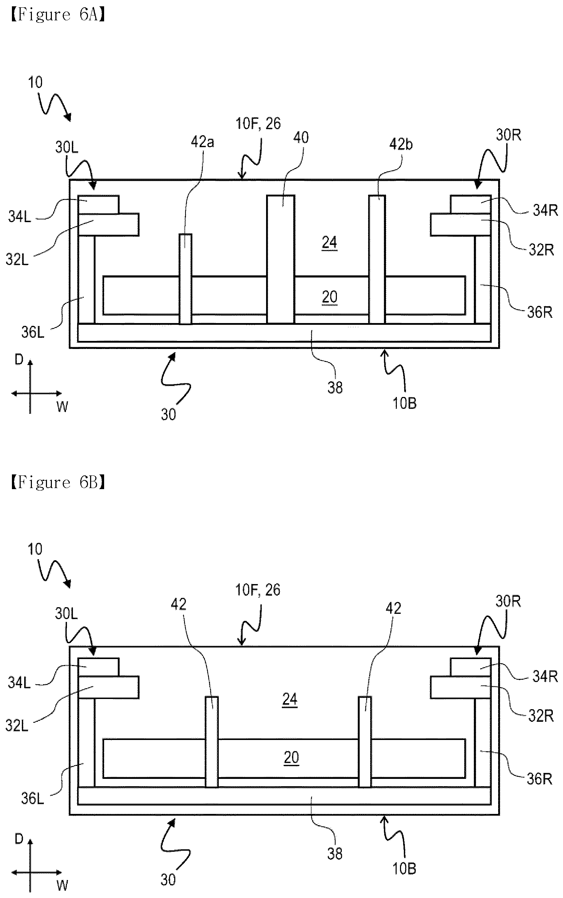

FIG. 6A and 6B show schematic cross-sectional plan views of different examples of a system. The example shown in FIG. 6A includes the features as described with reference to the previous drawings FIG. 5A and 5B, except that one of the flow reducing portions 42a and 42b has a length that is equal to the length of the flow separating portion 40. As such, the system according to this example may be capable of generating an asymmetrical thickness profile of the material deposited on a substrate.

The example shown in FIG. 6A includes the features as described with reference to the previous drawings FIG. 5A and 5B, except that the flow separating portion 40 is omitted. This demonstrates that the flow separating portion is optional only. As a result, the material deposited on a substrate may have a relatively smooth thickness profile.

In some examples, the width W32 of the flow narrowing portion 32, as for example shown in FIG. 2A without being limited to this specific example, may be 1 mm to 100 mm, or 2 mm to 80 mm, or 5 mm to 60 mm. Alternatively or additionally, a ratio (W32/L32) of the width W32 of the flow narrowing portion 32 to its length L32 may be 0.1 to 10, or 0.2 to 8, or 0.5 to 5.

Herein, a width offset ΔW, as for example shown in FIG. 2A without being limited to this specific example, indicates an offset in the width direction W between the sidewall 32S of the flow narrowing portion 32 and the sidewall 34S of the adjacent flow shaping portion 34. In some examples, a ratio of the width offset ΔW to the width W32 of the (corresponding) flow narrowing portion 32 may be 0.01 to 0.9, or 0.05 to 0.8, or 0.1 to 0.6. In particular, the width offset ΔW may be 0.1 mm to 30 mm, or 0.2 mm to 20 mm, or 0.5 mm to 10 mm.

In some examples, the flow narrowing portion 32 and the (respectively adjacent) flow shaping portion 34 may flush (i.e., their sidewalls 32S, 34S are aligned and continuous) on one widthwise side, and the sidewalls 32S and 34S may be offset from each other in the width direction by the width offset ΔW mentioned above on the opposite widthwise side. In such examples, the width offset ΔW may correspond to a difference of the widths, i.e., W34 - W32.

In some examples, a ratio (L34/L32) of the length L34 of the flow shaping portion 34 and the length L32 of the adjacent flow narrowing portion 32, as labelled for example in FIG. 2A without being limited to this specific example, may be 0.01 to 1, or 0.02 to 0.5, or 0.05 to 0.1. In particular, the length L34 of the flow shaping portion 34 may be 0.1 mm to 5 mm, or 0.1 mm to 4 mm, or 0.2 mm to 2 mm.

In some examples, an area between the manifold 20 and the opening 26 of the die 10 may be referred to as a land portion (implied by its length L21 in FIG. 1B without limitation to this specific example). In other words, the land portion may refer to a portion of the cavity 24 between the manifold 20 and the opening 26. The length L21 of the land portion in the principal deposition direction D may be 1 to 100 mm, or 10 to 80 mm, or 20 to 60 mm. In specific examples, a ratio of the length L32 of the flow narrowing portion 32 to the length of the land portion may be 0.5 to 0.999, or 0.8 to 0.995, or 0.9 to 0.99.

The ratios and numerical values and ranges mentioned herein may be applicable to any shape of the flow narrowing portion 32 and the flow shaping portion 34. It is understood that the ratios and numerical values and ranges mainly depend on the process specifications and product requirements, i.e., the secondary battery which is to be manufactured using the system and/or method disclosed herein. Furthermore, in examples where the sidewall 32S of the flow narrowing portion 32 and/or the sidewall 34S the flow shaping portion 34 is not parallel to the principle deposition direction D, the respective width W32, W34 and respective length L32, L34 may refer to the width and length at a most downstream position, in terms of the principal deposition direction D, of the flow narrowing portion 32 and the flow shaping portion 34, respectively.

In some examples, a distance between the flow shaping portion 34 and the opening 26, as for example shown as the distance DL and the distance DR in FIG. 4B without limitation to these specific examples, may be 0.1 mm to 2 mm, or 0.2 mm to 1 mm or 0.3 mm to 0.8 mm. Alternatively or additionally, a ratio (DL/L21 and/or DR/21) of said distance to the length L21 of the land portion may be 0.001 to 0.5, or 0.005 to 0.3, or 0.001 to 0.1.

Using the flow narrowing portion 32 and the flow shaping portion 34 as disclosed herein enables the deposition of a material in a manner that the profile of the deposited material (thickness profile and/or loading profile) has a uniform central region and a distinctive boundary region. The boundary region may be distinctive in that the amount of the deposited material is significantly reduced relative to the central region. The shape and position of the boundary region may be affected by the shape and dimensions of the flow shaping portion 34, particularly in combination with the flow narrowing portion 32.

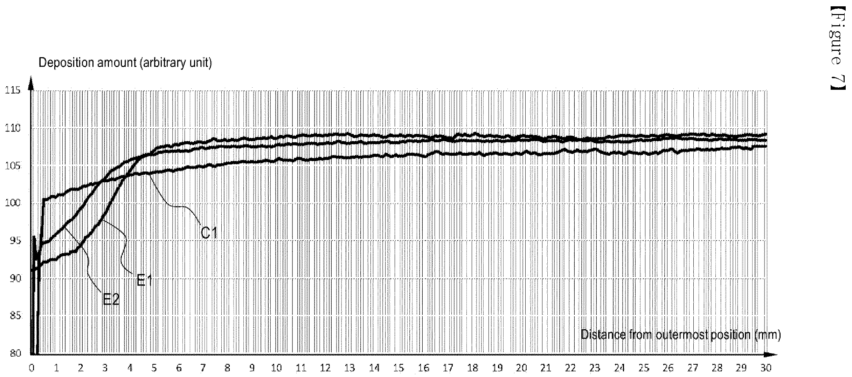

FIG. 7 shows examples of a profile of the deposited material, in which the respective profile is plotted in an arbitrary unit against a distance (in mm) from an outermost position of the deposited material in the width direction. In FIG. 7, examples E1 and E2 exhibit profiles that may be obtained using the flow narrowing portion 32 and the flow shaping portion 34 as disclosed herein. The profiles of the examples E1 and E2 each exhibit a sigmoid curve in a boundary region, which extends over a width of about 6.5 mm in example E1 and over a width of about 4 mm in example E2. Further observed is a respective central region that continues inwardly from the boundary regions. In the central regions of the examples E1 and E2, the profile is approximately constant. In other words, in the central region, a fluctuation of the profile of the deposited active material is 0.1% to 5%, or 0.1% to 4%, or 0.1% to 3%, relative to a maximum value of the profile.

In contrast, comparative example C1 shows a profile obtained from applying a thickness reduction tape on a coating roll, which is one conventional technology to reduce the thickness of the material deposited on the electrode sheet. As shown in FIG. 7, the comparative example C1 performs a steep increase in an outermost area (i.e., near distance 0 mm) and thus no distinctive boundary region. Further inwardly, the profile of the comparative example C1 shows a rather extended saturation curve with a steady increase until about 15 mm from the outermost position. As such, the profile obtained with the comparative example C1 has an relatively uneven profile of the deposited material and a relatively thick (or non-distinctive) boundary region, which may less beneficial for the efficiency of the battery manufacturing process as well as the battery product. This further shows that the use of the flow narrowing portion and the flow shaping portion as disclosed herein may contribute to increasing the efficiency of both the battery manufacturing process and the battery product.

In accordance with the above, a battery, in particular a secondary battery, is disclosed herein that is produced using the system for depositing a material or the secondary battery manufacturing system, or through the secondary battery manufacturing method disclosed herein. In particular, the battery may comprise an active material deposited such that a profile of the deposited active material performs a sigmoid curve (S-shaped curve) in a boundary region and the profile of the deposited active material is approximately constant in a central region. Herein, the profile may refer to a thickness profile or a loading profile (i.e., profile of a deposited weight) in the width direction. The deposited active material may be for a positive electrode or a negative electrode of the (secondary) battery.

The boundary region may be an outermost region of the deposited active material in the width direction. A widthwise extent of the boundary region may be 1 mm to 15 mm, or 2 mm to 10 mm, or 3 mm to 8 mm, from an outermost position of the deposited active material.

The central region may be continuously adjacent to the boundary region and located more distant, in the width direction, from said outermost position of the deposited active material than the boundary region. The central region may be a region of the deposited active material in which a fluctuation of the profile of the deposited active material is 0.1% to 5%, or 0.1% to 4%, or 0.1% to 3%, relative to a maximum value of the profile. Such a fluctuation may be considered as approximately constant.

In some examples, the distance (gap) DC between the flow separating portion 40 and the opening 26, as for example shown in FIG. 4B without limitation to this specific example, may be 0.1 mm to 2 mm, or 0.2 mm to 1 mm or 0.3 to 0.8 mm. Alternatively or additionally, a ratio (DC/L21) of the distance DC to the length L21 of the land portion may be 0.001 to 0.5, or 0.005 to 0.3, or 0.001 to 0.1.

In some examples, a ratio of a distance (gap) between a flow reducing portion 42 (as for example shown in FIG. 5A to 6B without limitation to these specific examples) and the opening 26 and said length L21 of the land portion may be 0.001 to 0.5, or 0.005 to 0.3, or 0.001 to 0.1.

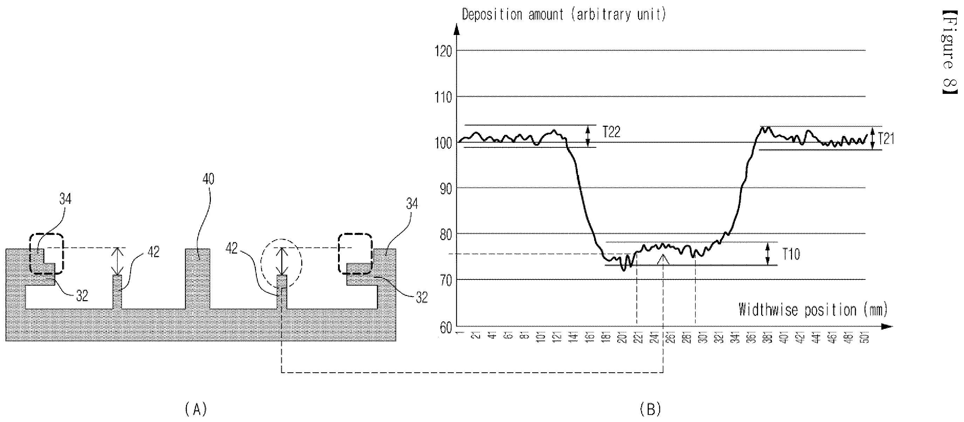

FIG. 8 shows a profile of the deposited mater ial according to another example. The illustration (A) of FIG. 8 schematically shows an example of a flow guide including two flow narrowing portions 32 and two flow shaping portions 34 disposed on laterally (i.e., in terms of the width direction) outermost positions. The flow guide further comprises a flow separating portion 40 arranged in center of the flow guide and two flow reducing portions 42 arranged laterally offset from the flow separating portion 40.

The right illustration (B) of FIG. 8 shows an example of a profile of the deposited material that may be obtained from using the flow reducing portion 42 as disclosed herein. In the illustration (B) of FIG. 8, a deposited amount of the material is plotted in an arbitrary unit against a widthwise position in the vicinity of one of the flow reducing portion 42 as depicted in the illustration (A) of FIG. 8. As shown, it is characteristic for using the flow reducing portion 42 as disclosed herein that the profile exhibits a curvature in an area corresponding to the position of the flow reducing portion 42. Namely, the profile of the deposited material exhibits a local maximum in center (in terms of the width direction) of the flow reducing portion 42 and decreases outwardly therefrom to a respective local minimum before sharply increasing outwardly (relative to the center of the flow reducing portion 42) in both widthwise directions (i.e., plus and minus directions). The profile then exhibits a maximum on each side laterally outward from the depression formed by the flow reducing portion 42. Further outwardly from each of the maximum, the profile smoothly decreases to a relatively constant level, thereby forming a shoulder on each side of said depression.

In the illustration (B) of FIG. 8, a profile drop T10 indicates a difference of the deposited amount of the material between the local maximum in center (in terms of the width direction W) of the flow reducing portion 42 and the respective minimum outwardly therefrom (one at each side). In some examples, the profile drop T10 is 0.1% to 10%, or 0.5% to 8%, or 1% to 5%, relative to the value of the local maximum in center of the flow reducing portion 42.

Further in the illustration (B) of FIG. 8, a profile drop T21 and T22 each indicate a difference of the deposited amount of the material between the respective local maximum adjacent and outward from the depression formed by the flow reducing portion 42 and a constant level further outward in the (positive and negative, respectively) width direction. In some examples, the profile drop T21 and/or the profile drop T22 is 0.1% to 10%, or 0.5% to 8%, or 1% to 5%, relative to the value of the respective maximum forming a shoulder laterally outward from the depression formed by the flow reducing portion 42.

In accordance with the above, a battery, in particular a secondary battery, is disclosed herein that is produced using the system for depositing a material or the secondary battery manufacturing system, or through the secondary battery manufacturing method disclosed herein. In particular, the battery may comprise an active material deposited such that a profile of the deposited active material has a depression with a local maximum in the center interposed between two minima. In examples, a difference of the amount of the deposited material between the local maximum and at least one of the two minima may be 0.1% to 10%, or 0.5% to 8%, or 1% to 5%, relative to the value of the maximum.

Alternatively or additionally, the battery may comprise an active material deposited such that the profile of the deposited active material has a depression and at least one shoulder formed by a respective maximum laterally adjacent to the depression. Outwardly from the at least one shoulder, the profile of the deposited active material may be approximately constant. A difference of the amount of the deposited material between the respective maximum and an outward area of constant profile may be 0.1% to 10%, or 0.5% to 8%, or 1% to 5%, relative to the value of the respective maximum.

The foregoing are distinct examples for demonstrating how the claimed subject matter may be implemented. There may be further possibilities for implementing the claimed subject matter that are not explicitly shown in the drawings. For example, the flow guide may comprise a larger number (two, three, four and so on) of flow separating portions. The flow guide may comprise a larger number (three, four, five and so on) of flow reducing portions. Furthermore, the flow guide may comprise a larger number (four, five, six, seven and so on) of flow edging portions, each of which combines a respective flow narrowing portion and a respective flow shaping portion in the above described manner.

## Claims

1. A system for depositing a material, the system comprising:
a die (10) comprising an opening (26) and a cavity communicating with the opening (26), the die (10) configured to extrude the material in a principal deposition direction (D) through the opening (26); and
a flow guide (30, 30a-f) in the cavity (24) configured to shape a flow of the material extruded by the die (10), wherein the flow guide (30, 30a-f) comprises:
- a flow narrowing portion (32, 32L, 32R) extending in a width direction (W) perpendicular to the principal deposition direction (D) so as to block the material from flowing through in the principal deposition direction (D); and
- a flow shaping portion (34, 34L, 34R) extending downstream from the flow narrowing portion (32, 32L, 32R) in the principal deposition direction (D), wherein a width (W34) of the flow shaping portion (34, 34L, 34R) is smaller than, or decreases from, a width (W32) of the flow narrowing portion (32, 32L, 32R), wherein the widths (W32, W34) are determined in the width direction (W),
wherein the flow narrowing portion (32, 32L, 32R) has a sidewall (32S) perpendicular to the width direction (W),
wherein the flow shaping portion (34, 34L, 34R) has a sidewall (34S) perpendicular to the width direction (W), wherein the sidewall (34S) of the flow shaping portion (34, 34L, 34R) is offset from the sidewall (32S) of the flow narrowing portion (32, 32L, 32R) in the width direction (W),
wherein the flow guide (30, 30a-f) further comprises a flow guiding portion (36L, 36R) elongated along the principal deposition direction (D) so as to block the material from flowing through in the width direction (W),
wherein the flow guiding portion (36L, 36R) extends from the flow narrowing portion (32, 32L, 32R) opposite to the principal deposition direction (D),
wherein the flow guide (30, 30a-f) further comprises a base portion (38) elongated in the width direction (W),
wherein the flow guiding portion (36L, 36R) extends from the base portion (38) in the principal deposition direction (D) to the flow narrowing portion (32, 32L, 32R),
wherein the flow guide (30, 30a-f) further comprises:
a further flow narrowing portion (32, 32C, 32R, 32L) extending in the width direction (W) so as to block the material from flowing through in the principal deposition direction (D);
a further flow shaping portion (34, 34C, 34R, 34L) extending downstream from the further flow narrowing portion (32, 32C, 32R, 32L) in the principal deposition direction (D), wherein a width (W34) of the further flow shaping portion (34, 34C, 34R, 34L) is smaller than, or decreases from, a width (W32) of the further flow narrowing portion (32, 32C, 32R, 32L);
a further flow guiding portion (36L, 36R) elongated along the principal deposition direction (D) so as to block the material from flowing through in the width direction (W),
wherein the further flow guiding portion (36L, 36R) extends from the flow narrowing portion (32, 32L, 32R) opposite to the principal deposition direction (D),
wherein the further flow guiding portion (36L, 36R) extends from the base portion (38) in the principal deposition direction (D) to the flow narrowing portion (32, 32L, 32R),
wherein the further flow narrowing portion (32, 32C, 32R, 32L) is spaced from the flow narrowing portion (32, 32L, 32R),
wherein the flow narrowing portion (32, 32L, 32R) and the further flow narrowing portion (32, 32R, 32L) are arranged at outermost positions, with respect to the width direction (W), inside the cavity (24) of the die (10),
**characterized in that**
the flow guide (30, 30a-f) further comprises a flow separating portion (40) elongated along the principal deposition direction (D) so as to block the material from flowing through in the width direction (W), the flow separating portion (40) being spaced from the flow narrowing portion (32, 32L, 32R),
the flow guide (30, 30a-f) further comprises two flow reducing portions (42) each extending from the base portion (38) in the principal deposition direction (D) and arranged laterally offset from the flow separating portion (40), the flow reducing portions (42) each having a length (L42) in the principal deposition direction (D) that is smaller than a length (L40) in the principal deposition direction (D) of the flow separating portion (40).

2. The system of claim 1,
wherein the die (10) comprises an upper die (12) and a lower die (14), the upper die (12) comprising a lower end face (12E) and the lower die (14) comprising an upper end face (14E), wherein the lower end face (12E) of the upper die (12) and the upper end face (14E) of the lower die (14) are configured to rest on each other,
wherein the cavity (24) is formed by the flow guide (30, 30a-f) being interposed between the end faces (12E, 14E) of the upper die (12) and the lower die (14).

3. The system of any of the preceding claims, further comprising:
a manifold (20) formed in the die (10) and communicating with the cavity (24),
wherein the flow guide (30, 30a-f) surrounds the manifold (20) at least on a backside of the manifold (20) opposite to the opening (26) of the die (10) and on lateral sides of the manifold (20) with respect to the width direction (W).

4. The system of claim 3,
wherein at least a part of the flow narrowing portion (32, 32L, 32R) is positioned between the opening (26) of the die (10) and the manifold (20).

5. The system of any of the preceding claims,
wherein a distance (DL, DR) between the flow shaping portion (34, 34L, 34R) and the opening (26) of the die (10) is smaller than a distance (DC) between the flow separating portion (40) and the opening (26) of the die (10).

6. The system of any of the preceding claims,
wherein the flow narrowing portion (32, 32L, 32R) and the flow shaping portion (34, 34L, 34R) together have a shape of a capital letter T or a capital letter L in a plan view perpendicular to the principal deposition direction (D) and perpendicular the width direction (W).

7. The system of any of the preceding claims,
wherein a width (W32) of the further flow narrowing portion (32, 32C, 32R, 32L) is different from the width (W32) of the flow narrowing portion (32, 32L, 32R); and/or
wherein a length (L32) of the further flow narrowing portion (32, 32C, 32R, 32L) is different from a length (L32) of the flow narrowing portion (32, 32L, 32R), the lengths (L32) being determined in the principal deposition direction (D).

8. A secondary battery manufacturing system comprising the system of any of the preceding claims, wherein the material is an active material, particularly a positive electrode active material, for manufacturing a secondary battery.

9. A secondary battery manufacturing method using the system of any of claims 1 to 7, comprising:
feeding an active material, particularly a positive electrode active material, to the die (10) such that the active material is received in the cavity (24) of the die (10) and discharges through the opening (26) of the die (10).

10. A battery, in particular a secondary battery, that is produced using the system of any of claims 1 to 7 and/or by the method of claim 9,
**characterized by**
comprising an active material deposited such that the profile of the deposited active material has a respective depression corresponding to each of the flow reducing portions (42), the depression with a local maximum in the center interposed between two minima.

11. The battery of claim 10, comprising an active material deposited such that a profile of the deposited active material performs a sigmoid curve in a boundary region and the profile of the deposited active material is approximately constant in a central region.

12. The battery of claim 10 or 11,
wherein the boundary region is an outermost region of the deposited active material in a width direct ion (W), wherein a widthwise extent of the boundary region is 1 mm to 15 mm, or 2 mm to 10 mm, or 3 mm to 8 mm, from an outermost position of the deposited active material.

13. The battery of any of claims 10 to 12,
wherein the central region is a region of the deposited active material in which the profile of the deposited active material is approximately constant, in particular wherein a fluctuation of the profile of the deposited active material is 0.1% to 5%, or 0.1% to 4%, or 0.1% to 3%, relative to a maximum value of the profile.

14. The battery of any of the preceding claims 10 to 13, wherein a difference of the amount of the deposited material between the local maximum and at least one of the two minima is 0.1% to 10%, or 0.5% to 8%, or 1% to 5%, relative to the value of the maximum.

15. The battery of any of the preceding claims 10 to 14, wherein the profile of the deposited active material has at least one shoulder formed by a respective maximum laterally adjacent to the depression, wherein the profile of the deposited active material is approximately constant outwardly from the at least one shoulder.

16. The battery of claim 15, wherein a difference of the amount of the deposited material between the respective maximum and an outward area of constant profile is 0.1% to 10%, or 0.5% to 8%, or 1% to 5%, relative to the value of the respective maximum.

## Patentansprüche

1. System zum Abscheiden eines Materials, wobei das System Folgendes umfasst:
eine Matrize (10), die eine Öffnung (26) und einen Hohlraum, der mit der Öffnung (26) in Verbindung steht, umfasst, wobei die Matrize (10) konfiguriert ist, um das Material in einer Hauptabscheidungsrichtung (D) durch die Öffnung (26) zu extrudieren; und
eine Strömungsführung (30, 30a-f) in dem Hohlraum (24), die konfiguriert ist, um eine Strömung des durch die Matrize (10) extrudierten Materials zu formen, wobei die Strömungsführung (30, 30a-f) Folgendes umfasst:
- einen Strömungsverengungsabschnitt (32, 32L, 32R), der sich in einer Breitenrichtung (W) senkrecht zu der Hauptabscheidungsrichtung (D) erstreckt, um das Material daran zu hindern, in der Hauptabscheidungsrichtung (D) hindurchzuströmen; und
- einen Strömungsformungsabschnitt (34, 34L, 34R), der sich stromabwärts von dem Strömungsverengungsabschnitt (32, 32L, 32R) in der Hauptabscheidungsrichtung (D) erstreckt, wobei eine Breite (W34) des Strömungsformungsabschnitts (34, 34L, 34R) kleiner als eine Breite (W32) des Strömungsverengungsabschnitts (32, 32L, 32R) ist oder davon abnimmt, wobei die Breiten (W32, W34) in der Breitenrichtung (W) bestimmt werden,
wobei der Strömungsverengungsabschnitt (32, 32L, 32R) eine Seitenwand (32S) senkrecht zu der Breitenrichtung (W) aufweist,
wobei der Strömungsformungsabschnitt (34, 34L, 34R) eine Seitenwand (34S) senkrecht zu der Breitenrichtung (W) aufweist, wobei die Seitenwand (34S) des Strömungsformungsabschnitts (34, 34L, 34R) von der Seitenwand (32S) des Strömungsverengungsabschnitts (32, 32L, 32R) in der Breitenrichtung (W) versetzt ist,
wobei die Strömungsführung (30, 30a-f) ferner einen Strömungsführungsabschnitt (36L, 36R) umfasst, der entlang der Hauptabscheidungsrichtung (D) verlängert ist, um das Material daran zu hindern, in der Breitenrichtung (W) hindurchzuströmen,
wobei sich der Strömungsführungsabschnitt (36L, 36R) von dem Strömungsverengungsabschnitt (32, 32L, 32R) entgegengesetzt zu der Hauptabscheidungsrichtung (D) erstreckt,
wobei die Strömungsführung (30, 30a-f) ferner einen Basisabschnitt (38) umfasst, der in der Breitenrichtung (W) verlängert ist,
wobei sich der Strömungsführungsabschnitt (36L, 36R) von dem Basisabschnitt (38) in der Hauptabscheidungsrichtung (D) zu dem Strömungsverengungsabschnitt (32, 32L, 32R) erstreckt,
wobei die Strömungsführung (30, 30a-f) ferner Folgendes umfasst:
einen weiteren Strömungsverengungsabschnitt (32, 32C, 32R, 32L), der sich in der Breitenrichtung (W) erstreckt, um das Material daran zu hindern, in der Hauptabscheidungsrichtung (D) hindurchzuströmen;
einen weiteren Strömungsformungsabschnitt (34, 34C, 34R, 34L), der sich stromabwärts von dem weiteren Strömungsverengungsabschnitt (32, 32C, 32R, 32L) in der Hauptabscheidungsrichtung (D) erstreckt, wobei eine Breite (W34) des weiteren Strömungsformungsabschnitts (34, 34C, 34R, 34L) kleiner als eine Breite (W32) des weiteren Strömungsverengungsabschnitts (32, 32C, 32R, 32L) ist oder davon abnimmt;
einen weiteren Strömungsführungsabschnitt (36L, 36R), der entlang der Hauptabscheidungsrichtung (D) verlängert ist, um das Material daran zu hindern, in der Breitenrichtung (W) hindurchzuströmen,
wobei sich der weitere Strömungsführungsabschnitt (36L, 36R) von dem Strömungsverengungsabschnitt (32, 32L, 32R) entgegengesetzt zu der Hauptabscheidungsrichtung (D) erstreckt,
wobei sich der weitere Strömungsführungsabschnitt (36L, 36R) von dem Basisabschnitt (38) in der Hauptabscheidungsrichtung (D) zu dem Strömungsverengungsabschnitt (32, 32L, 32R) erstreckt,
wobei der weitere Strömungsverengungsabschnitt (32, 32C, 32R, 32L) von dem Strömungsverengungsabschnitt (32, 32L, 32R) beabstandet ist,
wobei der Strömungsverengungsabschnitt (32, 32L, 32R) und der weitere Strömungsverengungsabschnitt (32, 32R, 32L) an äußersten Positionen in Bezug auf die Breitenrichtung (W) innerhalb des Hohlraums (24) der Matrize (10) angeordnet sind,
**dadurch gekennzeichnet, dass**
die Strömungsführung (30, 30a-f) ferner einen Strömungstrennabschnitt (40) umfasst, der entlang der Hauptabscheidungsrichtung (D) verlängert ist, um das Material daran zu hindern, in der Breitenrichtung (W) hindurchzuströmen, wobei der Strömungstrennabschnitt (40) von dem Strömungsverengungsabschnitt (32, 32L, 32R) beabstandet ist,
die Strömungsführung (30, 30a-f) ferner zwei Strömungsreduzierungsabschnitte (42) umfasst, die sich jeweils von dem Basisabschnitt (38) in der Hauptabscheidungsrichtung (D) erstrecken und seitlich von dem Strömungstrennabschnitt (40) versetzt angeordnet sind, wobei die Strömungsreduzierungsabschnitte (42) jeweils eine Länge (L42) in der Hauptabscheidungsrichtung (D) aufweisen, die kleiner als eine Länge (L40) in der Hauptabscheidungsrichtung (D) des Strömungstrennabschnitts (40) ist.

2. System nach Anspruch 1,
wobei die Matrize (10) eine obere Matrize (12) und eine untere Matrize (14) umfasst, wobei die obere Matrize (12) eine untere Endfläche (12E) umfasst und die untere Matrize (14) eine obere Endfläche (14E) umfasst, wobei die untere Endfläche (12E) der oberen Matrize (12) und die obere Endfläche (14E) der unteren Matrize (14) konfiguriert sind, um aufeinander aufzuliegen,
wobei der Hohlraum (24) dadurch gebildet wird, dass die Strömungsführung (30, 30a-f) zwischen den Endflächen (12E, 14E) der oberen Matrize (12) und der unteren Matrize (14) angeordnet ist.

3. System nach einem der vorhergehenden Ansprüche, ferner umfassend:
einen Verteiler (20), der in der Matrize (10) gebildet ist und mit dem Hohlraum (24) in Verbindung steht,
wobei die Strömungsführung (30, 30a-f) den Verteiler (20) mindestens auf einer Rückseite des Verteilers (20) gegenüber der Öffnung (26) der Matrize (10) und auf lateralen Seiten des Verteilers (20) in Bezug auf die Breitenrichtung (W) umgibt.

4. System nach Anspruch 3,
wobei mindestens ein Teil des Strömungsverengungsabschnitts (32, 32L, 32R) zwischen der Öffnung (26) der Matrize (10) und dem Verteiler (20) positioniert ist.

5. System nach einem der vorhergehenden Ansprüche,
wobei ein Abstand (DL, DR) zwischen dem Strömungsformungsabschnitt (34, 34L, 34R) und der Öffnung (26) der Matrize (10) kleiner als ein Abstand (DC) zwischen dem Strömungstrennabschnitt (40) und der Öffnung (26) der Matrize (10) ist.

6. System nach einem der vorhergehenden Ansprüche,
wobei der Strömungsverengungsabschnitt (32, 32L, 32R) und der Strömungsformungsabschnitt (34, 34L, 34R) zusammen eine Form eines Großbuchstabens T oder eines Großbuchstabens L in einer Draufsicht senkrecht zu der Hauptabscheidungsrichtung (D) und senkrecht zu der Breitenrichtung (W) aufweisen.

7. System nach einem der vorhergehenden Ansprüche,
wobei sich eine Breite (W32) des weiteren Strömungsverengungsabschnitts (32, 32C, 32R, 32L) von der Breite (W32) des Strömungsverengungsabschnitts (32, 32L, 32R) unterscheidet; und/oder
wobei sich eine Länge (L32) des weiteren Strömungsverengungsabschnitts (32, 32C, 32R, 32L) von einer Länge (L32) des Strömungsverengungsabschnitts (32, 32L, 32R) unterscheidet, wobei die Längen (L32) in der Hauptabscheidungsrichtung (D) bestimmt werden.

8. Sekundärbatterie-Herstellungssystem, umfassend das System nach einem der vorhergehenden Ansprüche, wobei das Material ein aktives Material, insbesondere ein aktives Material einer positiven Elektrode, zum Herstellen einer Sekundärbatterie ist.

9. Sekundärbatterie-Herstellungsverfahren, das das System nach einem der Ansprüche 1 bis 7 verwendet, umfassend:
Zuführen eines aktiven Materials, insbesondere eines aktiven Materials einer positiven Elektrode, zu der Matrize (10), sodass das aktive Material in dem Hohlraum (24) der Matrize (10) aufgenommen wird und durch die Öffnung (26) der Matrize (10) austritt.

10. Batterie, insbesondere Sekundärbatterie, die unter Verwendung des Systems nach einem der Ansprüche 1 bis 7 und/oder durch das Verfahren nach Anspruch 9 hergestellt wird,
**dadurch gekennzeichnet, dass**
sie ein aktives Material umfasst, das so abgeschieden wird, dass das Profil des abgeschiedenen aktiven Materials eine jeweilige Vertiefung aufweist, die jedem der strömungsreduzierenden Abschnitte (42) entspricht, wobei die Vertiefung mit einem lokalen Maximum in der Mitte zwischen zwei Minima angeordnet ist.

11. Batterie nach Anspruch 10, die ein aktives Material umfasst, das so abgeschieden wird, dass ein Profil des abgeschiedenen aktiven Materials eine Sigmoidkurve in einem Grenzbereich ausführt und das Profil des abgeschiedenen aktiven Materials in einem zentralen Bereich ungefähr konstant ist.

12. Batterie nach Anspruch 10 oder 11,
wobei der Grenzbereich ein äußerster Bereich des abgeschiedenen aktiven Materials in einer Breitenrichtung (W) ist, wobei eine Breitenausdehnung des Grenzbereichs 1 mm bis 15 mm oder 2 mm bis 10 mm oder 3 mm bis 8 mm von einer äußersten Position des abgeschiedenen aktiven Materials beträgt.

13. Batterie nach einem der Ansprüche 10 bis 12,
wobei der zentrale Bereich ein Bereich des abgeschiedenen aktiven Materials ist, in dem das Profil des abgeschiedenen aktiven Materials ungefähr konstant ist, wobei insbesondere eine Schwankung des Profils des abgeschiedenen aktiven Materials 0,1 % bis 5 % oder 0,1 % bis 4 % oder 0,1 % bis 3 % in Bezug auf einen Maximalwert des Profils beträgt.

14. Batterie nach einem der vorhergehenden Ansprüche 10 bis 13, wobei eine Differenz der Menge des abgeschiedenen Materials zwischen dem lokalen Maximum und mindestens einem der zwei Minima 0,1 % bis 10 % oder 0,5 % bis 8 % oder 1 % bis 5 % in Bezug auf den Wert des Maximums beträgt.

15. Batterie nach einem der vorhergehenden Ansprüche 10 bis 14, wobei das Profil des abgeschiedenen aktiven Materials mindestens eine Schulter aufweist, die durch ein jeweiliges Maximum seitlich neben der Vertiefung gebildet wird, wobei das Profil des abgeschiedenen aktiven Materials von der mindestens einen Schulter nach außen ungefähr konstant ist.

16. Batterie nach Anspruch 15, wobei eine Differenz der Menge des abgeschiedenen Materials zwischen dem jeweiligen Maximum und einem Außenbereich mit konstantem Profil 0,1 % bis 10 % oder 0,5 % bis 8 % oder 1 % bis 5 % in Bezug auf den Wert des jeweiligen Maximums beträgt.

## Revendications

1. Système de dépôt d'une matière, le système comprenant :
une matrice (10) comprenant une ouverture (26) et une cavité communiquant avec l'ouverture (26), la matrice (10) étant configurée pour extruder la matière dans une direction principale de dépôt (D) à travers l'ouverture (26) ; et
un guide d'écoulement (30, 30a-f) dans la cavité (24) configuré pour la mise en forme d'un écoulement de la matière extrudée par la matrice (10), le guide d'écoulement (30, 30a-f) comprenant :
- une partie de rétrécissement de l'écoulement (32, 32L, 32R) s'étendant dans un sens de la largeur (W) perpendiculaire au sens principal du dépôt (D) afin de bloquer l'écoulement de la matière dans le sens principal du dépôt (D) ; et
- une partie de mise en forme de l'écoulement (34, 34L, 34R) s'étendant en aval de la partie de rétrécissement de l'écoulement (32, 32L, 32R) dans la direction principale de dépôt (D), une largeur (W34) de la partie de mise en forme de l'écoulement (34, 34L, 34R) étant inférieure à une largeur (W32) de la partie de rétrécissement de l'écoulement (32, 32L, 32R), ou diminuant depuis celle-ci, les largeurs (W32, W34) étant déterminées dans le sens de la largeur (W),
la partie de rétrécissement de l'écoulement (32, 32L, 32R) possédant une paroi latérale (32S) perpendiculaire au sens de la largeur (W),
la partie de mise en forme de l'écoulement (34, 34L, 34R) possédant une paroi latérale (34S) perpendiculaire au sens de la largeur (W), la paroi latérale (34S) de la partie de mise en forme de l'écoulement (34, 34L, 34R) étant décalée depuis la paroi latérale (32S) de la partie de rétrécissement de l'écoulement (32, 32L, 32R) dans le sens de la largeur (W),
le guide d'écoulement (30, 30a-f) comprenant en outre une partie de guidage de l'écoulement (36L, 36R) allongée dans le sens principal du dépôt (D) afin de bloquer l'écoulement de la matière dans le sens de la largeur (W),
la partie de guidage de l'écoulement (36L, 36R) s'étendant depuis la partie de rétrécissement de l'écoulement (32, 32L, 32R) située face au sens principal du dépôt (D),
le guide d'écoulement (30, 30a-f) comprenant en outre une portion de base (38) allongée dans le sens de la largeur (W),
la partie de guidage de l'écoulement (36L, 36R) s'étendant de la partie de base (38) dans le sens principal du dépôt (D) à la partie de rétrécissement de l'écoulement (32, 32L, 32R),
le guide d'écoulement (30, 30a-f) comprenant en outre :
une autre partie de rétrécissement de l'écoulement (32, 32C, 32R, 32L) s'étendant dans le sens de la largeur (W) de façon à bloquer l'écoulement de matière dans le sens principal du dépôt (D) ;
une autre partie de mise en forme de l'écoulement (34, 34C, 34R, 34L) s'étendant en aval de l'autre partie de rétrécissement de l'écoulement (32, 32C, 32R, 32L) dans le sens principal de dépôt (D), une largeur (W34) de l'autre partie de mise en forme de l'écoulement (34, 34C, 34R, 34L) étant inférieure à une largeur (W32) de l'autre partie de rétrécissement de l'écoulement (32, 32C, 32R, 32L), ou diminuant depuis celle-ci;
une autre portion de guidage de l'écoulement (36L, 36R) allongée dans le sens principal du dépôt (D) de façon à bloquer l'écoulement à travers de la matière dans le sens de la largeur (W),
l'autre partie de guidage de l'écoulement (36L, 36R) s'étendant de la partie de rétrécissement de l'écoulement (32, 32L, 32R) située face au sens principal du dépôt (D),
l'autre partie de guidage de l'écoulement (36L, 36R) s'étendant de la partie de base (38) dans le sens principal du dépôt (D) à la partie de rétrécissement de l'écoulement (32, 32L, 32R),
l'autre partie de rétrécissement de l'écoulement (32, 32C, 32R, 32L) étant espacée de la partie de rétrécissement de l'écoulement (32, 32L, 32R),
la partie de rétrécissement de l'écoulement (32, 32L, 32R) et l'autre partie de rétrécissement de l'écoulement (32, 32R, 32L) étant agencées dans des positions extérieures, relativement au sens de la largeur (W), à l'intérieur de la cavité (24) de la matrice (10),
**caractérisé en ce que**
le guide d'écoulement (30, 30a-f) comprend en outre une partie de séparation de l'écoulement (40) allongée dans le sens principal du dépôt (D) afin de bloquer l'écoulement transversal de la matière dans le sens de la largeur (W), la partie de séparation de l'écoulement (40) étant espacée de la partie de rétrécissement de l'écoulement (32, 32L, 32R),
le guide d'écoulement (30, 30a-f) comprenant en outre deux parties de réduction de l'écoulement (42), chacune desquelles s'étendant de la partie de base (38) dans le sens principal de dépôt (D), et étant agencée de façon latéralement décalée de la partie de séparation de l'écoulement (40), les parties de réduction de l'écoulement (42) présentant chacune une longueur (L42) dans le sens principal de dépôt (D) qui est inférieure à une longueur (L40) dans le sens principal de dépôt (D) de la partie de séparation de l'écoulement (40).

2. Système selon la revendication 1,
la matrice (10) comprenant une matrice supérieure (12) et une matrice inférieure (14), la matrice supérieure (12) comprenant une face terminale inférieure (12E) et la matrice inférieure (14) comprenant une face terminale supérieure (14E), la face terminale inférieure (12E) de la matrice supérieure (12) et la face terminale supérieure (14E) de la matrice inférieure (14) étant configurées de façon à reposer l'une sur l'autre,
la cavité (24) étant formée par l'interposition du guide d'écoulement (30, 30a-f) entre les faces d'extrémité (12E, 14E) de la matrice supérieure (12) et de la matrice inférieure (14).

3. Système selon une quelconque des revendications précédentes, comprenant en outre :
un collecteur (20) formé dans la matrice (10) et communiquant avec la cavité (24),
le guide d'écoulement (30, 30a-f) entourant le collecteur (20) au moins sur un côté postérieur du collecteur (20) face à l'ouverture (26) de la matrice (10) et sur des côtés latéraux du collecteur (20) relativement au sens de la largeur (W).

4. Système selon la revendication 3,
au moins un élément de la partie du rétrécissement de l'écoulement (32, 32L, 32R) étant positionné entre l'ouverture (26) de la matrice (10) et le collecteur (20).

5. Système selon une quelconque des revendications précédentes,
une distance (DL, DR) entre la partie de mise en forme de l'écoulement (34, 34L, 34R) et l'ouverture (26) de la matrice (10) étant inférieure à une distance (DC) entre la partie de séparation de l'écoulement (40) et l'ouverture (26) de la matrice (10).

6. Système selon une quelconque des revendications précédentes,
la partie de rétrécissement de l'écoulement (32, 32L, 32R) et la partie de mise en forme de l'écoulement (34, 34L, 34R) présentant ensemble la forme d'un T majuscule ou d'un L majuscule dans une vue en plan perpendiculaire au sens principal de dépôt (D) et perpendiculaire au sens de la largeur (W).

7. Système selon une quelconque des revendications précédentes,
une largeur (W32) de l'autre partie de rétrécissement de l'écoulement (32, 32C, 32R, 32L) étant différente de la largeur (W32) de la partie de rétrécissement de l'écoulement (32, 32L, 32R) ; et/ou
une longueur (L32) de l'autre partie de rétrécissement de l'écoulement (32, 32C, 32R, 32L) étant différente d'une longueur (L32) de la partie de rétrécissement de l'écoulement (32, 32L, 32R), les longueurs (L32) étant déterminées dans le sens principal de dépôt (D).

8. Système de fabrication d'une batterie secondaire comprenant le système selon une quelconque des revendications précédentes, la matière étant une matière active, notamment une matière active d'électrode positive, pour la fabrication d'une batterie secondaire.

9. Procédé de fabrication d'une batterie secondaire faisant usage du système selon une quelconque des revendications 1 à 7, comprenant :
l'introduction d'une matière active, notamment une matière active d'électrode positive, dans la matrice (10) de sorte que la matière active soit reçue dans la cavité (24) de la matrice (10) et soit évacuée à travers l'ouverture (26) de la matrice (10).

10. Batterie, notamment une batterie secondaire, réalisée en faisant usage du système selon une des revendications 1 à 7 et/ou par le procédé selon la revendication 9,
**caractérisée**
**en ce qu'**elle comprend une matière active déposée de sorte que le profil de la matière active déposée présente un évidement respectif correspondant à chacune des parties de réduction de l'écoulement (42), l'évidement présentant un maximum local au centre intercalé entre deux minimums.

11. Batterie selon la revendication 10, comprenant une matière active déposée de sorte qu'un profil de la matière active déposée présente une courbe sigmoïde dans une zone limite, et que le profil de la matière active déposée soit approximativement constant dans une zone centrale.

12. Batterie selon la revendication 10 ou 11,
la zone limite étant une zone extérieure de la matière active déposée dans un sens de la largeur (W), une étendue dans le sens de la largeur de la zone limite mesurant de 1 mm à 15 mm, ou de 2 mm à 10 mm, ou de 3 mm à 8 mm, depuis une position extérieure de la matière active déposée.

13. Batterie selon une quelconque des revendications 10 à 12,
la zone centrale étant une zone de la matière active déposée dans laquelle le profil de la matière active déposée est à peu près constant, en particulier une fluctuation du profil de la matière active déposée mesurant de 0,1 % à 5 %, ou de 0,1 % à 4 %, ou de 0,1 % à 3 %, relativement à une valeur maximale du profil.

14. Batterie selon une quelconque des revendications précédentes 10 à 13, une différence de la quantité de matière déposée entre le maximum local et au moins un des deux minimums étant 0,1 % à 10 %, ou 0,5 % à 8 %, ou 1 % à 5 % relativement à la valeur du maximum.

15. Batterie selon une quelconque des revendications précédentes 10 à 14, le profil de la matière active déposée présentant au moins un épaulement formé par un maximum respectif latéralement adjacent à l'évidement, le profil de la matière active déposée étant approximativement constant vers l'extérieur depuis au moins un épaulement.

16. Batterie selon la revendication 15, une différence de la quantité de matière déposée entre le maximum respectif et une zone extérieure du profil constant étant 0,1 % à 10 %, ou 0,5 % à 8 %, ou 1 % à 5 % relativement à la valeur du maximum respectif.
